# EUROPEAN PATENT APPLICATION

(11) **EP 4 727 109 A1**
(43) Date of publication of application: **15.04.2026**
(21) Application number: 25206007.4
(22) Date of filing: 01.10.2025
(51) Int. Cl.: H04N 1/00, H04N 1/60, G06F 3/12, G06K 15/02, H04N 1/32

(54) **INFORMATION PROCESSING APPARATUS, INFORMATION PROCESSING METHOD, AND COMPUTER-READABLE STORAGE MEDIUM**

(30) Priority: 08.10.2024 JP 2024176737; 26.12.2024 JP 2024231023
(71) Applicant: Canon Kabushiki Kaisha, Tokyo, 146-8501 (JP)
(72) Inventor: SHINDO, Yukihiro, Tokyo (JP); NAKATANI, Yuki, Tokyo (JP); KIMURA, Takumi, Tokyo (JP); NAKASHIO, Hidekazu, Tokyo (JP); YAMADA, Michihiko, Tokyo (JP)
(74) Representative: WESER & Kollegen Patentanwälte PartmbB

(57) **Abstract**

An information processing apparatus comprises display control means for displaying a setting screen for a plurality of content to be printed, and setting means for performing a print setting for making color impressions uniform between the plurality of content based on a user instruction via the setting screen.

## Description

### TECHNICAL FIELD

The present disclosure relates to color setting.

### BACKGROUND

To express the worldview of a brand or the like, a unified design is sometimes developed to a plurality of different items such as advertising media, promotion items, and commercial products. A plurality of commercial materials having the same design are called collaterals. Collaterals may be created by printing on various media using a plurality of kinds of printers. At this time, it is one of important quality items to uniform color impressions regardless of printers or media.

However, according to a general printing method using a printer, print color is optimized in accordance with the use purposes of a printer and medium in a printing system provided by each printer manufacturer. Even if color ranges expressible by printer devices are equivalent, it is difficult to uniform color impressions. To uniform color impressions in a printing/display system that prints by a combination of a plurality of kinds of printers and various media, various color settings need to be performed properly each time in accordance with respective printing systems/print conditions. In a workflow from design production to printing, settings regarding color reside in three places, that is, a monitor, an application for design production or the like, and a printer. Further, there are various color settings such as monitor display color setting, design work color space setting, device color setting to be simulated (color setting of calibration conditions), and color setting of printer printing. To properly perform these color settings, an advanced knowledge and skill are required for a color management system (to be referred to as a CMS hereinafter), a design production environment, and a printing system.

Japanese Patent No. 5690763 has disclosed a print setting program for facilitating appropriate color setting for reflecting, in a printer print color, color adjustment of the printer print color executed in the work color space of an application such as design production.

### SUMMARY

However, when various images are printed by a combination of a plurality of kinds of printers and various media, it is hard to easily execute color setting for making color impressions uniform.

The present disclosure provides a technique of facilitating color setting for making color impressions uniform between contents.

The present disclosure in its first aspect provides an information processing apparatus as specified in claim 1. Optional features are specified in claims 2 to 13.

The present disclosure in its second aspect provides an information processing method as specified in claim 14.

The present disclosure in its third aspect provides a computer-readable storage medium as specified in claim 15.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
Fig. 1 is a block diagram showing an example of the configuration of a color setting management system;
Fig. 2 is a block diagram showing an example of the hardware configuration of a computer apparatus;
Fig. 3 is a block diagram showing an example of the functional configuration of the computer apparatus;
Fig. 4A is a view showing an example of the configuration of a setting screen 4000;
Fig. 4B is a view showing an example of the configuration of a setting screen 4000;
Fig. 5A-a is a flowchart of the operation of the color setting management system;

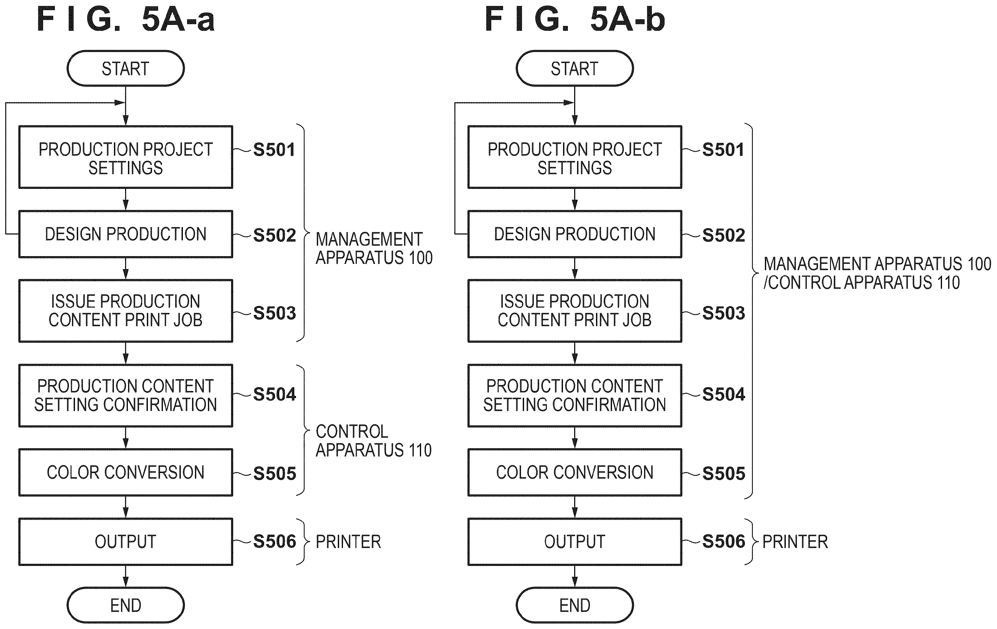

Fig. 5A-b is a flowchart of the operation of the color setting management system;

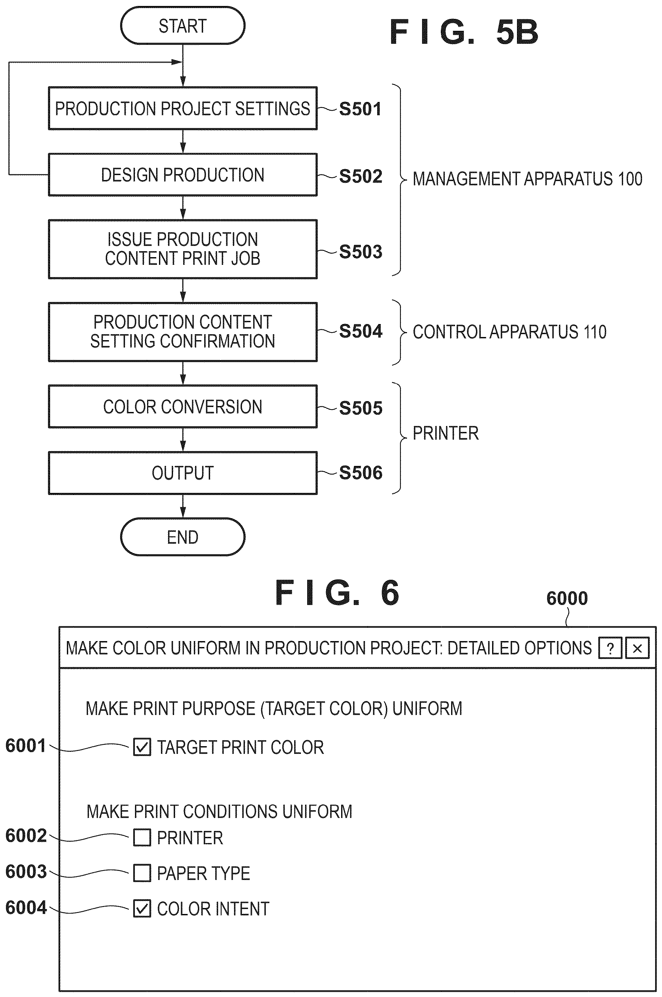

Fig. 5B is a flowchart of the operation of the color setting management system;
Fig. 6 is a view showing an example of the configuration of a screen 6000 for setting detailed options;

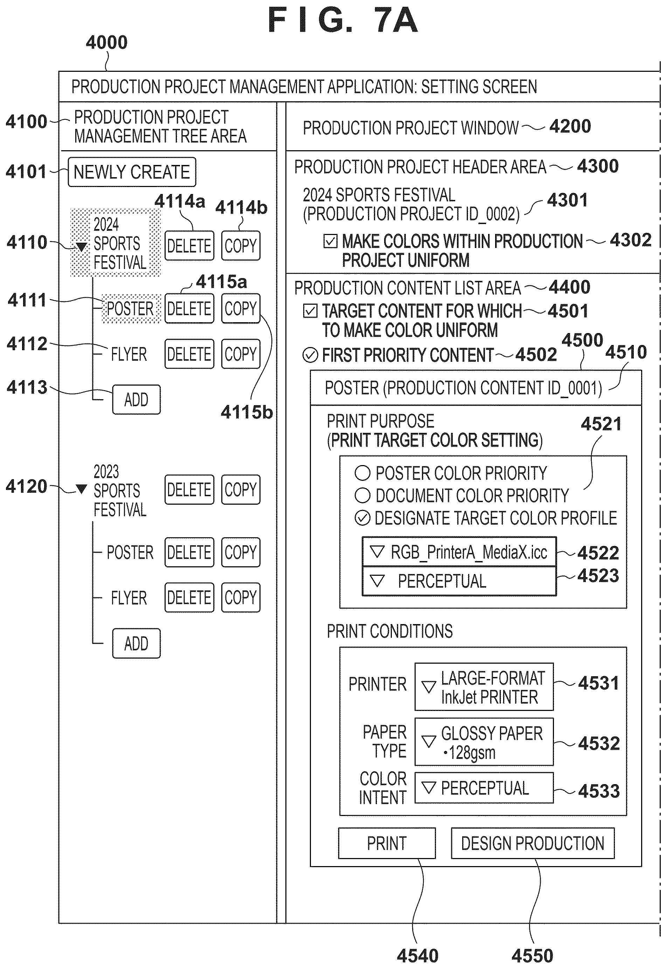

Fig. 7A is a view showing an example of the configuration of the setting screen 4000;

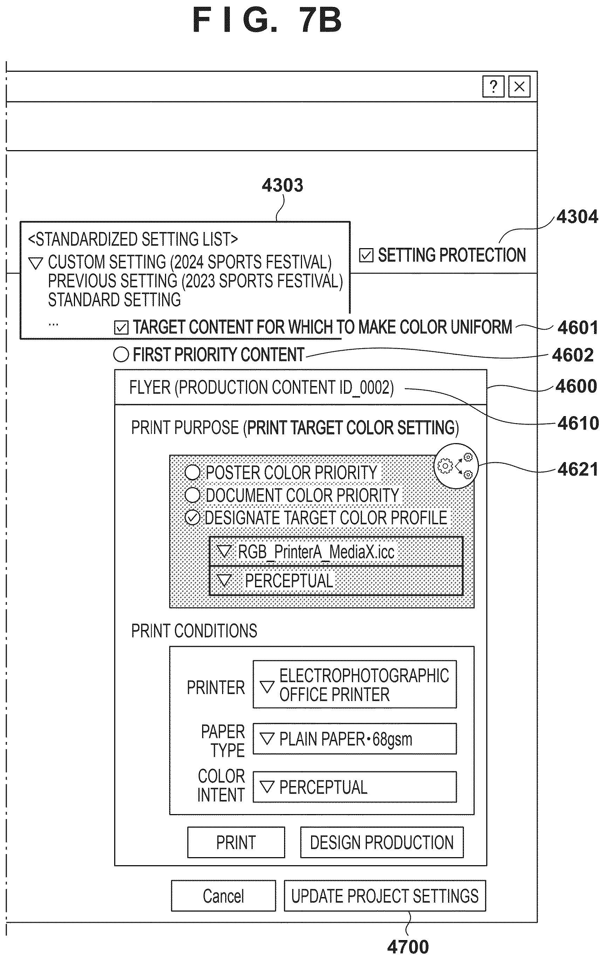

Fig. 7B is a view showing an example of the configuration of the setting screen 4000;

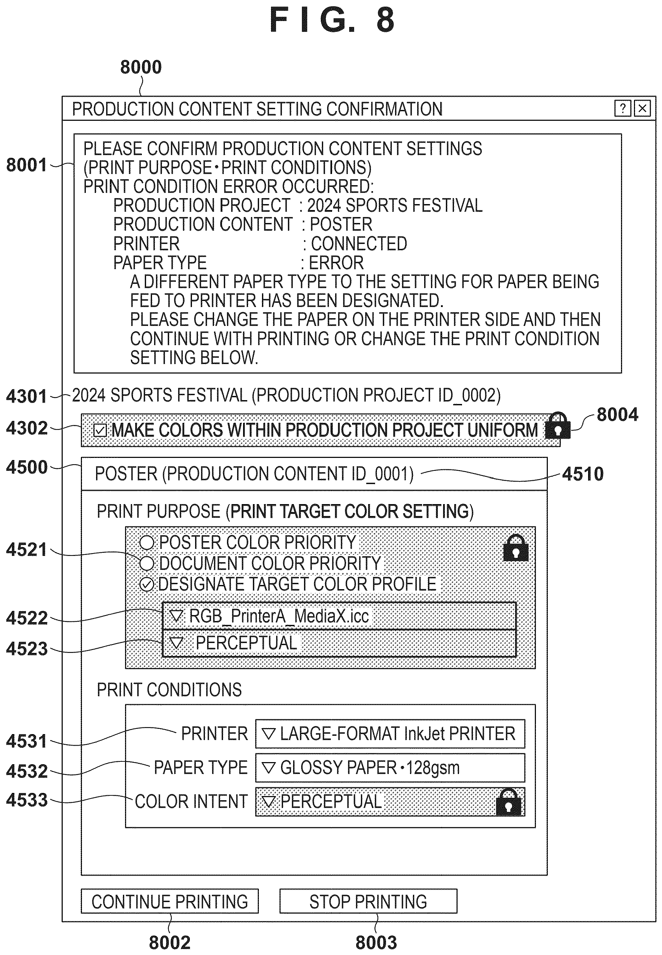

Fig. 8 is a view showing an example of the display of a screen 8000;

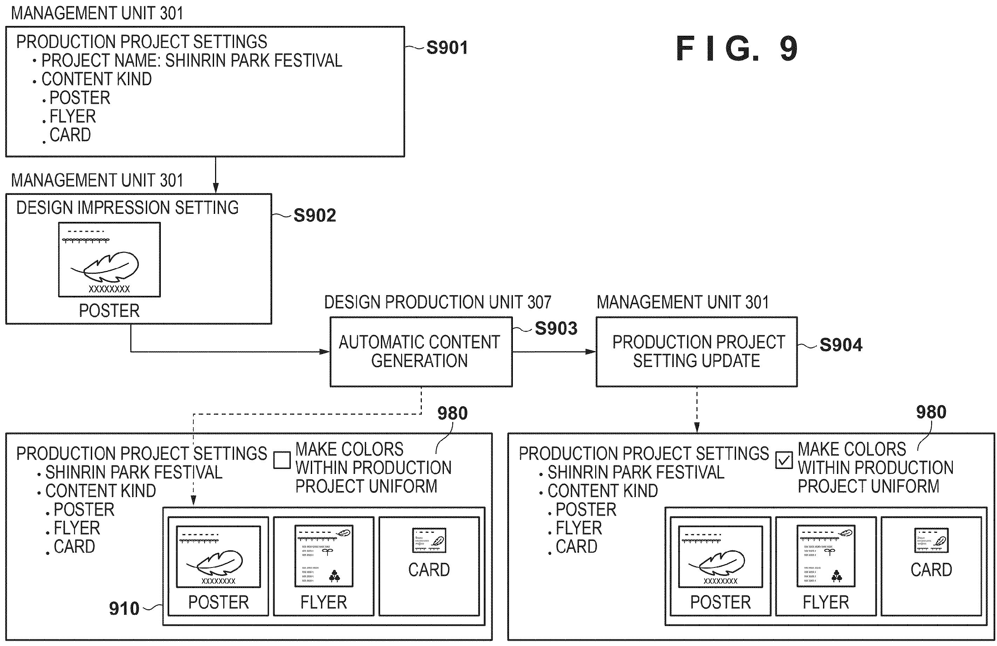

Fig. 9 is a flowchart of the operation of the color setting management system;

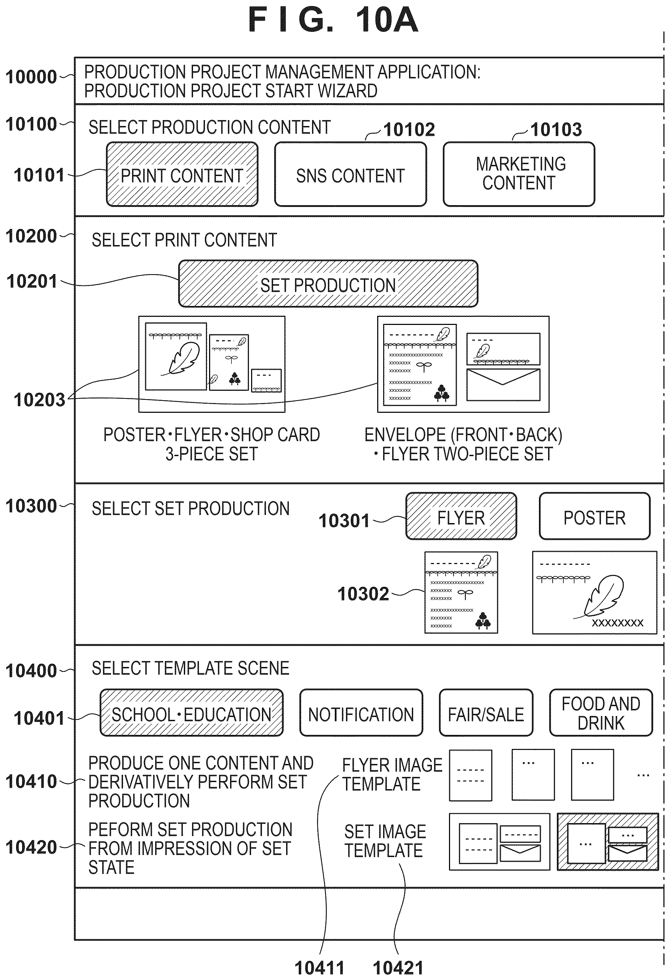

Fig. 10A is a view showing an example of the display of a setting screen 10000;

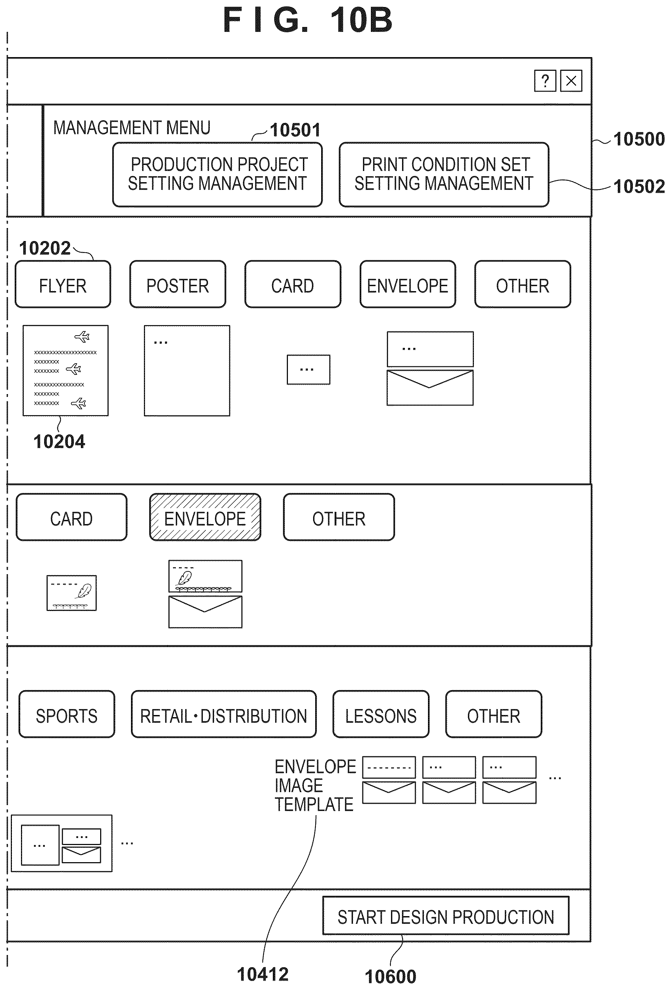

Fig. 10B is a view showing an example of the display of a setting screen 10000;

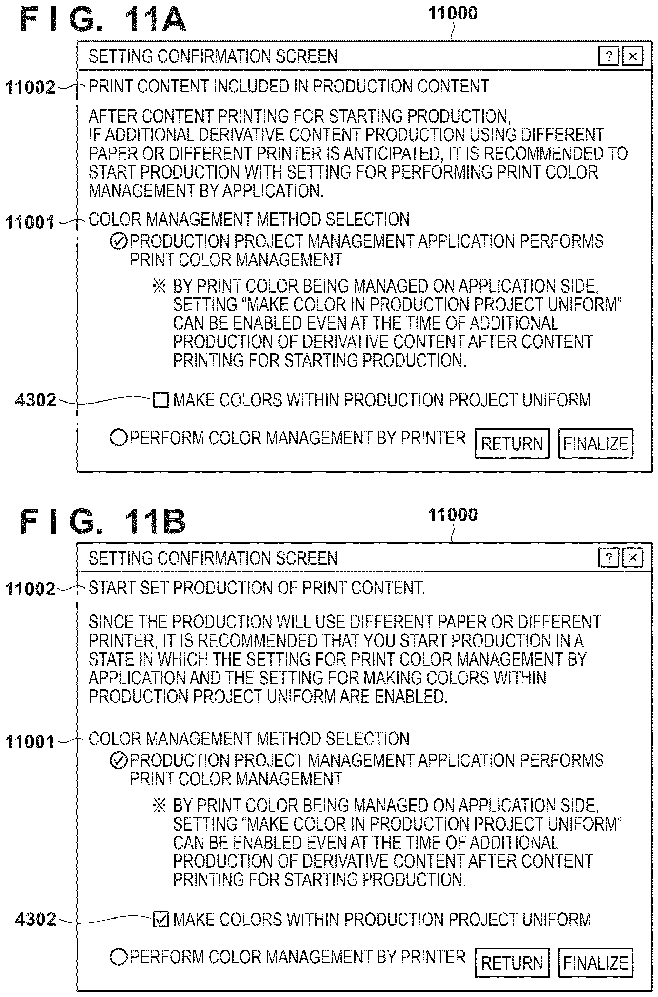

Fig. 11A is a view showing an example of the display of a screen 11000;
Fig. 11B is a view showing an example of the display of the screen 11000;

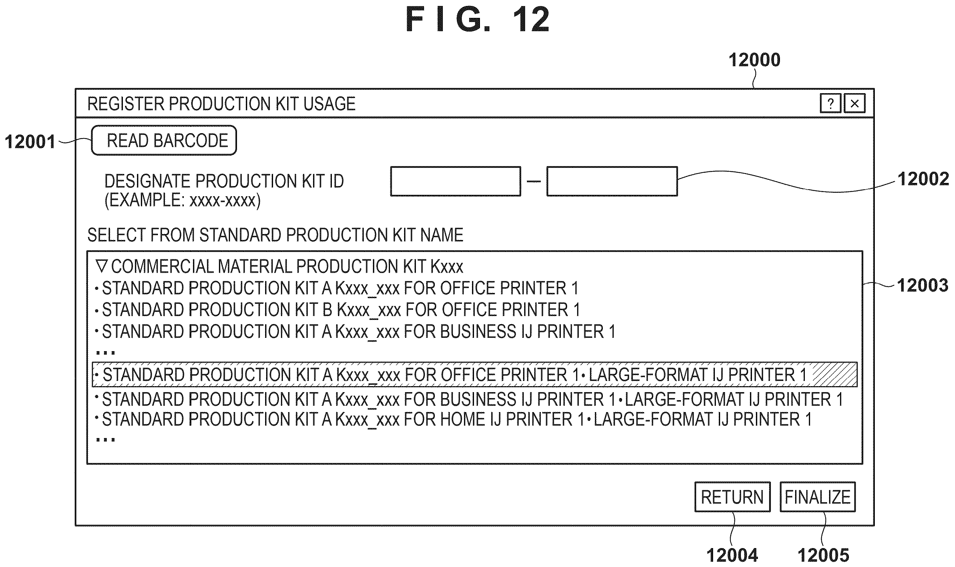

Fig. 12 is a view showing an example of the display of a setting screen 12000;

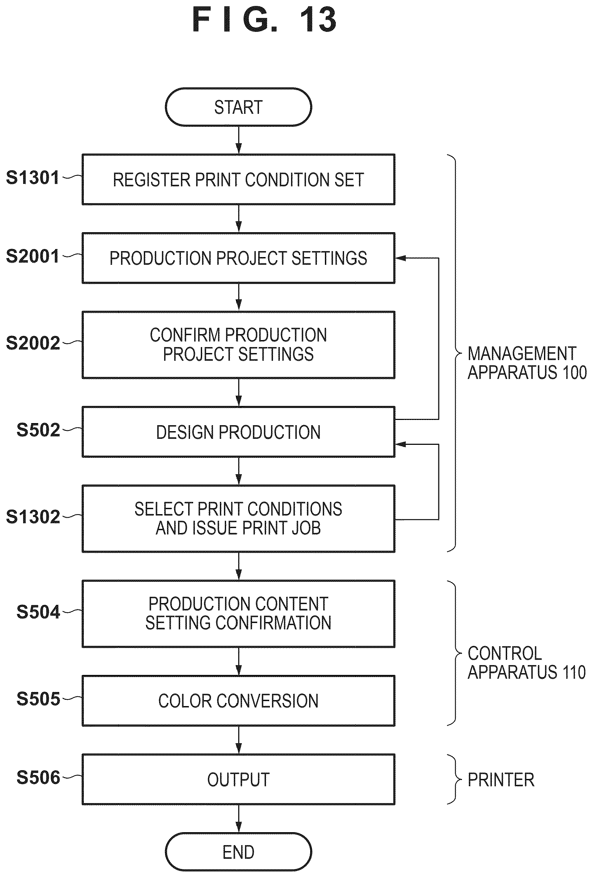

Fig. 13 is a flowchart of the operation of the color setting management system;

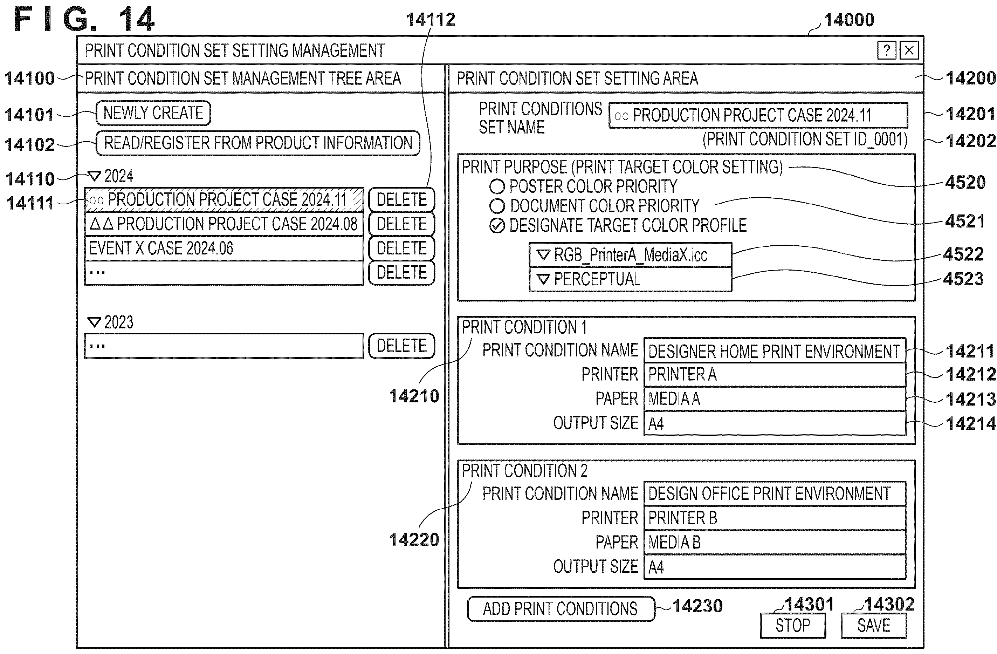

Fig. 14 is a view showing an example of the display of a setting screen 14000;

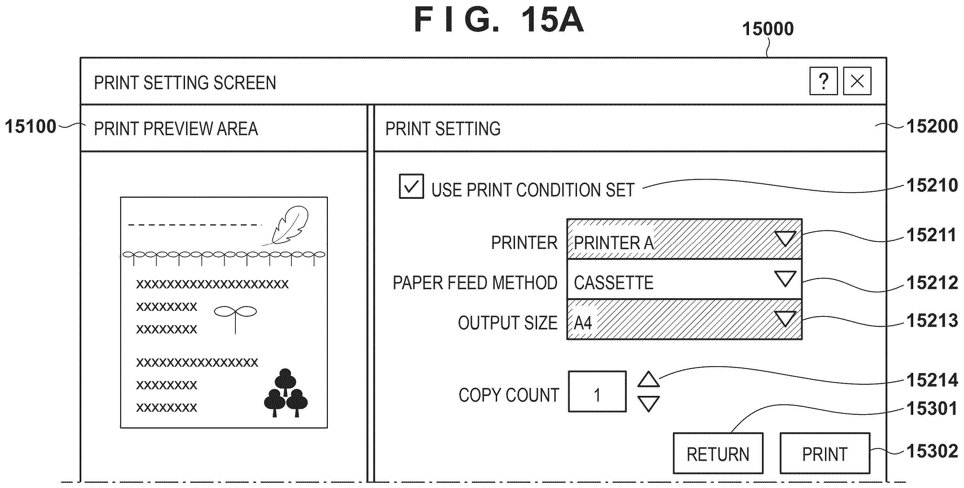

Fig. 15A is a view showing an example of the display of a setting screen 15000;

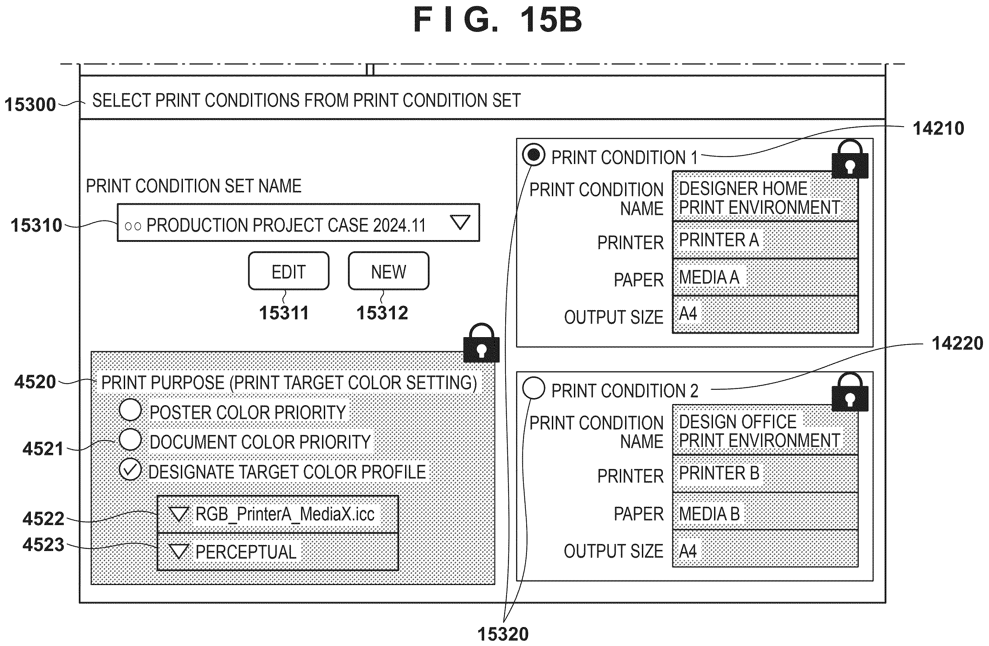

Fig. 15B is a view showing an example of the display of a setting screen 15000;

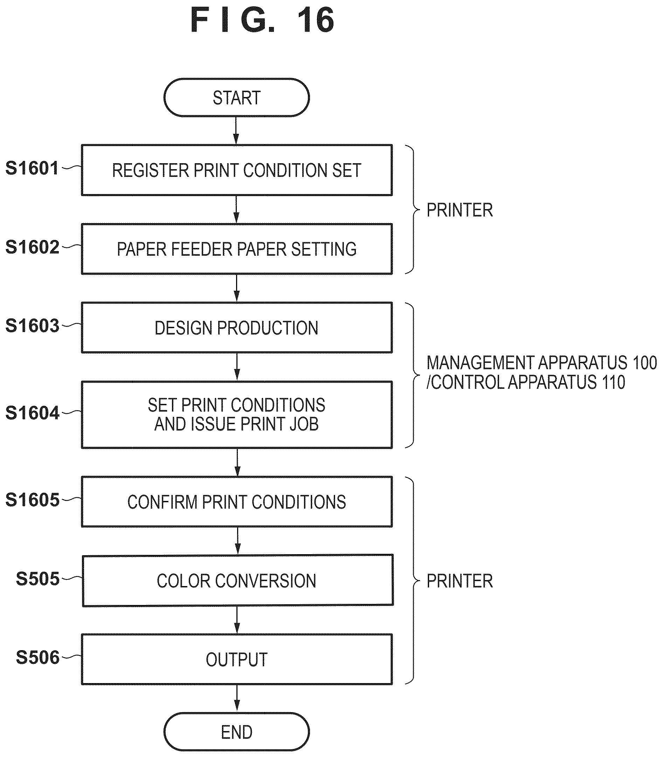

Fig. 16 is a flowchart of the operation of the color setting management system;

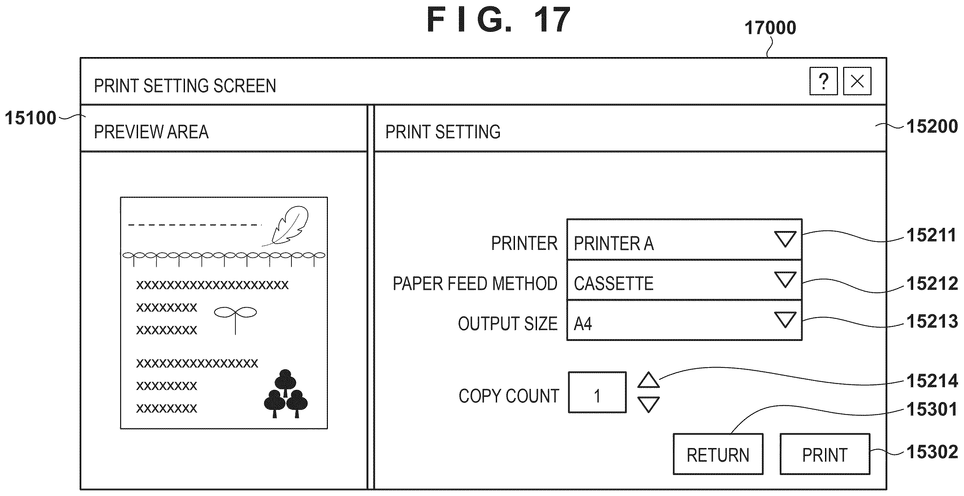

Fig. 17 is a view showing an example of the display of a setting screen 17000;

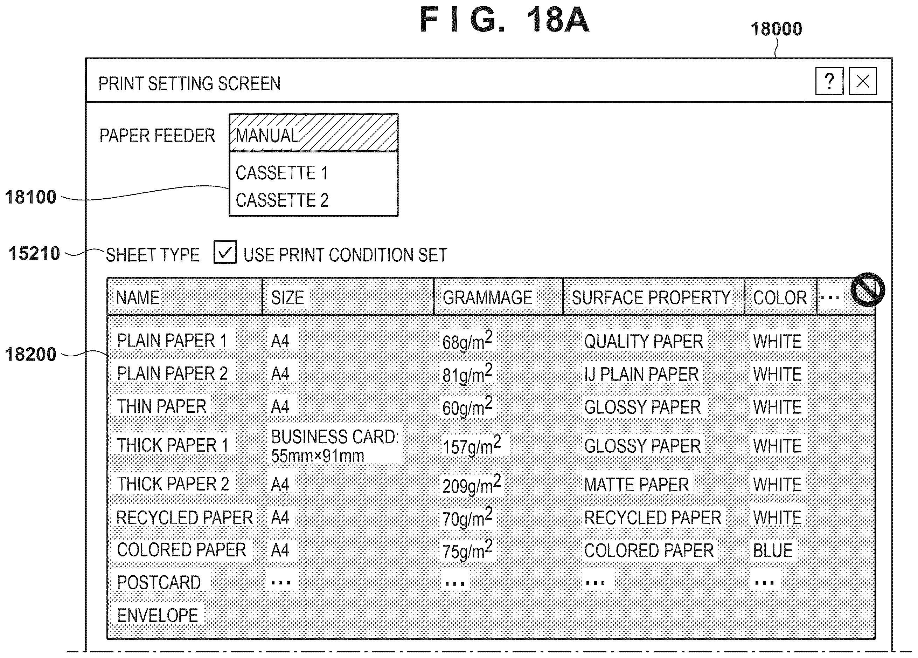

Fig. 18A is a view showing an example of the display of a setting screen 18000;

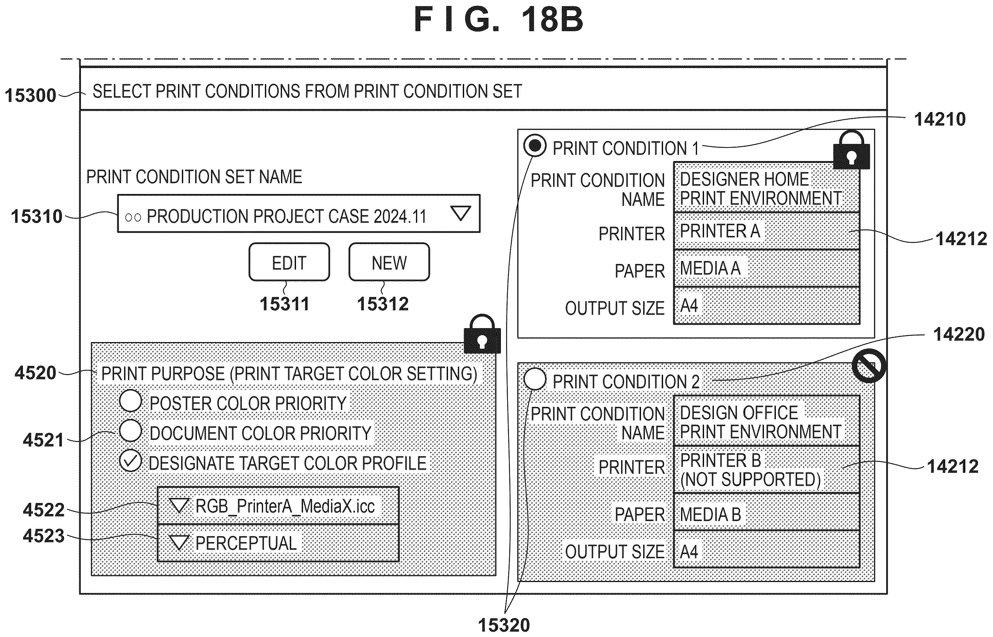

Fig. 18B is a view showing an example of the display of a setting screen 18000;

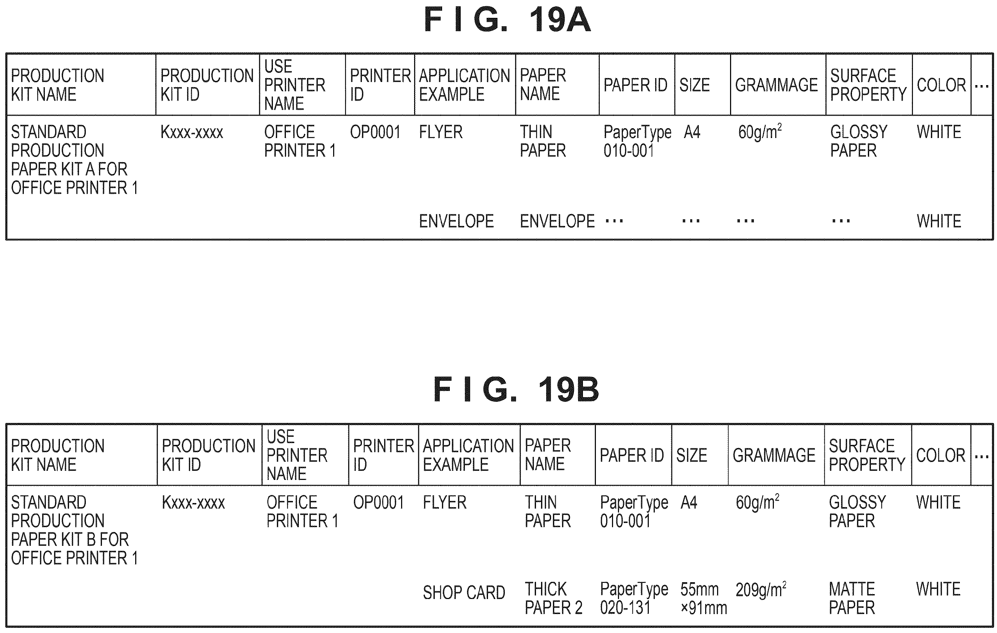

Fig. 19A shows an example of production kit commercial product information;
Fig. 19B shows an example of production kit commercial product information;

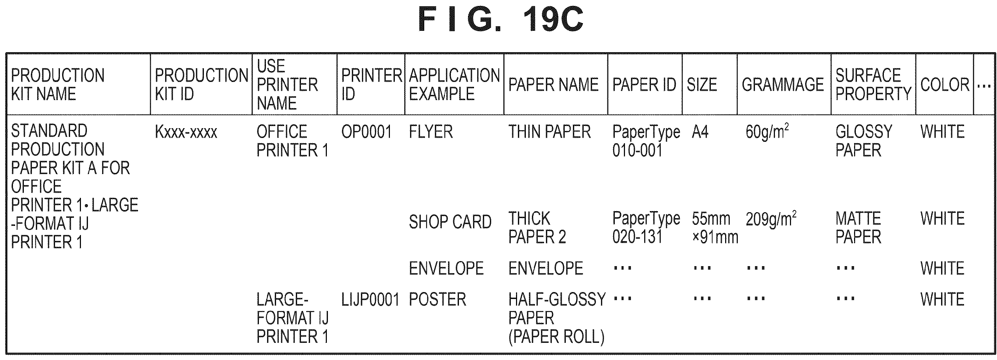

Fig. 19C shows an example of production kit commercial product information; and

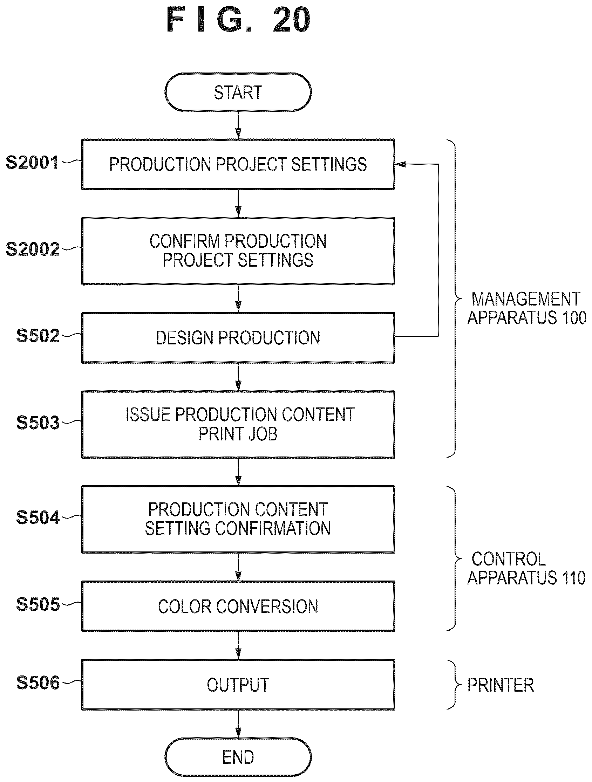

Fig. 20 is a flowchart of the operation of the color setting management system.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### (First Embodiment)

First, terms used in this specification are defined in advance, as follows.

### (Color Reproduction Region)

A color reproduction region indicates the range of colors that can be reproduced in an arbitrary color space. The color reproduction region is also called a color reproduction range or a gamut. A gamut volume is an index representing the extent of this color reproduction region. The gamut volume is the volume of a color reproduction region in an arbitrary color space. Chromaticity points forming the color reproduction region are sometimes discrete. For example, a specific color reproduction region is represented by 729 points on CIE-L*a*b*, and points between them are obtained by using a well-known interpolating operation such as tetrahedral interpolation or cubic interpolation. In this case, as the gamut volume of this color reproduction region, it is possible to use a volume obtained by calculating the volumes on CIE-L*a*b* of tetrahedrons or cubes forming the color reproduction region and accumulating the calculated volumes, in accordance with the interpolating operation method.

The color reproduction region is not limited to a specific color space. In this embodiment, however, a color reproduction region in the CIE-L*a*b* space will be explained as an example. Similarly, the numerical value of a color reproduction region in this embodiment indicates a volume obtained by accumulation in the CIE-L*a*b* space on the premise of tetrahedral interpolation.

### (Gamut Mapping)

Gamut mapping is conversion between different color gamuts. For example, gamut mapping is mapping from an input color gamut to an output color gamut. Conversion in the same color gamut is not called gamut mapping. Perceptual/Saturation/Colorimetric, and the like of the ICC profile are general. Mapping may be performed using one 3D LUT. Furthermore, mapping may be performed after conversion of a color space into a standard color space. For example, if an input color space is sRGB, conversion into the CIE-L*a*b* color space is performed. The mapping processing to an output color gamut is performed on the CIE-L*a*b* color space. Mapping may be performed using a 3D LUT or using a conversion formula. Conversion between the input color space and the output color space may be performed simultaneously. For example, the input color space may be the sRGB color space, and conversion into RGB values or CMYK values unique to a printing apparatus may be performed at the time of output.

### (Production Contents)

Production contents are input digital data to be processed, and may be data of one page or data of a plurality of pages. A single page may be held as image data or expressed as a drawing command. When a single page is expressed as a drawing command, rendering may be performed to convert the drawing command into image data and then perform processing. The image data is a two-dimensional array of pixels. The pixel holds information representing a color in a color space. The information representing a color is a RGB value, a CMYK value, a K value, a CIE-L*a*b* value, a LCH value, a HSV value, a HLS value, or the like.

### <Color Setting Management System>

To perform printing that puts importance on the consistency of color impressions between a plurality of different printing systems/print conditions (applications, printers, and media) for a plurality of production contents of the same design, proper color setting needs to be performed on the respective printing systems/print conditions. That is, such printing requires an advanced knowledge and skill for color and each printing system.

Considering this, this embodiment will explain a color setting management system that enables printing with a uniform color impression for a plurality of production contents of the same design without requiring an advanced knowledge and skill for color and an individual printing system and without any cumbersome procedures.

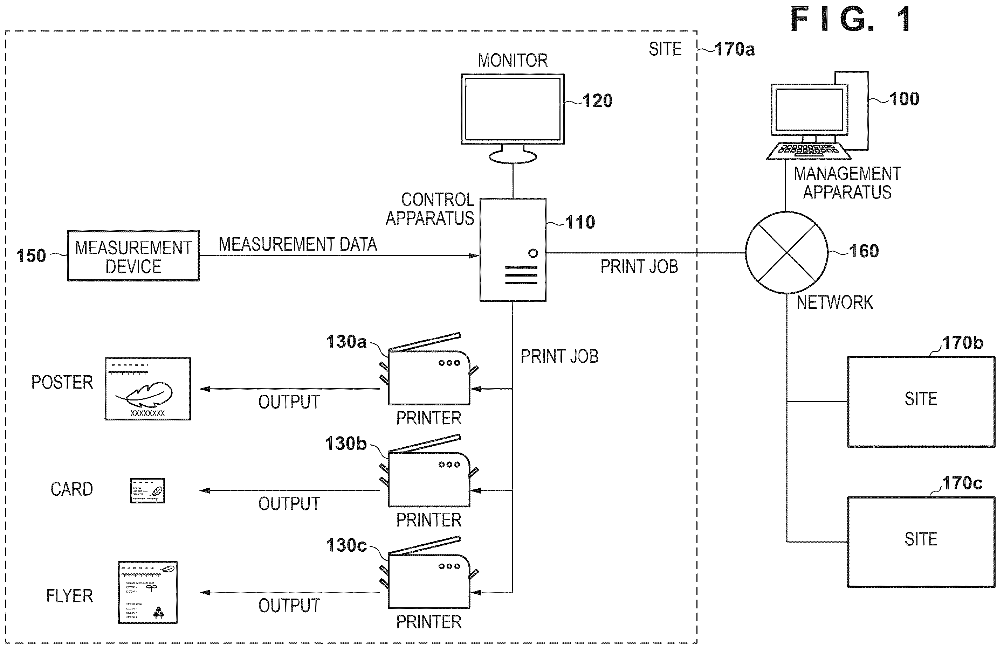

Next, an example of the configuration of the color setting management system according to this embodiment will be explained with reference to Fig. 1. In the color setting management system, a management apparatus 100, and sites 170a, 170b, and 170c are connected via a network 160.

The network 160 is, for example, a local area network, LAN, the Internet, or an intranet. The network 160 may be a wired network, a wireless network, or a network including wired and wireless networks.

The sites 170a to 170c correspond to, for example, the locations of a company, shop, and printing company where printers are installed. For example, the management apparatus 100 is installed in the head office of a company, and the branch shops (sites 170a to 170c) of the company execute printing work of production contents by printers installed in the shops in accordance with production project management information designated by the head office. For example, the site 170a corresponds to a printing site in Tokyo, the site 170b corresponds to a printing site in Osaka, and the site 170c corresponds to a printing site in Fukuoka.

The site 170a includes a control apparatus 110, a monitor 120, printers 130a to 130c, and a measurement device 150. In this embodiment, each of the sites 170b and 170c similarly includes the control apparatus 110, the monitor 120, the printers 130a to 130c, and the measurement device 150 for descriptive convenience. However, the system configuration need not be the same in all sites, and may differ between sites as long as the system has a configuration capable of executing processing such as printing based on a job transmitted (issued) from the management apparatus 100. Of the sites 170a, 170b, and 170c, the site 170a will be exemplified below. However, the following explanation similarly applies to the sites 170b and 170c.

The management apparatus 100 is connected to the control apparatus 110 via the network 160 in a communication-enabling manner. The management apparatus 100 performs color settings and print settings including print conditions for respective production contents included in a production project, generates a print job including the print settings, and transmits the generated print job to the control apparatus 110.

The management apparatus 100 can generate jobs such as a design production job by an application, a submission job to a printing company, a monitor color calibration job to a printing company, and a print job to a printer, and can transmit them to a site. A case where the management apparatus 100 generates a print job as a job and transmits it to the control apparatus 110 will be explained below.

Note that the management apparatus 100 may have a design production function for production contents and manage the project settings of design production, instead of transmitting a design production job to another apparatus.

The control apparatus 110 is connected in a communication-enabling manner to the measurement device 150 installed in the site 170a via a USB cable or a communication network such as an intranet. The control apparatus 110 controls the operation of the measurement device 150 and obtains measurement data output from the measurement device 150.

The monitor 120 is connected to the control apparatus 110. The monitor 120 includes a liquid crystal screen or a touch panel screen, and can display various user interface screens (UI screens) generated by the control apparatus 110.

Also, the control apparatus 110 is connected in a communication-enabling manner to the printers 130a to 130c via a communication network such as an intranet. The control apparatus 110 obtains device information of each printer, and issues a production content print instruction to each printer. Note that the device information of the printer includes paper information and information such as a printer profile.

The control apparatus 110 issues a print instruction to the printers 130a to 130c so as to uniform a color impression with a target color in accordance with a color setting (setting of the target color of production contents in printing) included in print settings in print conditions (settings regarding a printer profile such as a printer, a paper type, and a color intent) included in the print settings included in a print job received from the management apparatus 100.

Note that generation of a color profile for making a color impression uniform with a target color in each color condition, and color processing using a color profile can be executed by the control apparatus 110 or any of the printers 130a to 130c.

The printers 130a to 130c print an image on a print medium such as paper using, for example, an electrophotographic process technique based on a print instruction from the control apparatus 110. The printers 130a, 130b, and 130c may be color printers or monochrome printers. The printers 130a, 130b, and 130c may be printers based on another image formation technique such as an inkjet technique.

Note that the printers 130a, 130b, and 130c are an example of printing apparatuses, and the printing apparatus may be a multi-function peripheral having a copy function, a FAX function, and the like in addition to a print function.

The measurement device 150 is a spectrophotometer that measures the color value of a measurement target based on the reflectance or transmittance of visible light having a wavelength of about 400 nm to 700 nm. The measurement device 150 is prepared for, for example, each site. The measurement device 150 measures color patches on print media on which a chart (including a plurality of color patches) is printed by a corresponding one of the printers 130a, 130b, and 130c, converts a wavelength obtained by the measurement for each patch into a value in, for example, the L*a*b* space or the XYZ color space, and outputs data of the value after the conversion as measurement data.

Note that the configuration of the color setting management system shown in Fig. 1 is merely an example, and the number of sites and the configuration of an apparatus in each site can be properly changed. For example, when the management apparatus 100 is installed in each of the sites 170a to 170c, the color setting management system may have a configuration in which the management apparatus 100, a printer, and a measurement device are directly connected, and the management apparatus 100 issues a job to output a print instruction to the printer without the intervention of the control apparatus 110.

Alternatively, the color setting management system may have a configuration in which the management apparatus 100 issues a job to the control apparatus 110, and upon receiving the job, the control apparatus 110 sets setting information such as print conditions or changes settings with respect to the job. The color setting management system may have a configuration in which an information processing apparatus having the functions of both the management apparatus 100 and control apparatus 110 is provided in each site.

In this manner, this embodiment adopts a configuration in which settings regarding color are performed for a production project including a plurality of production contents. With this configuration, color setting management for making color impressions uniform can be easily performed in the printing/display system that prints by a combination of a plurality of kinds of printers and various media regardless of the printing system of each printer.

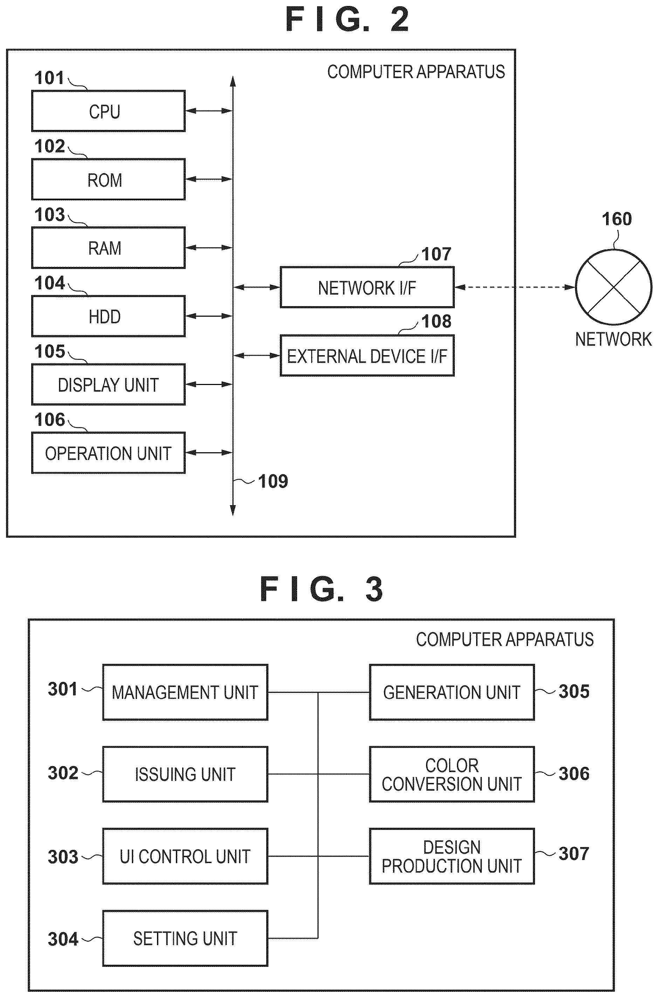

An example of the functional configuration of a computer apparatus applicable to the management apparatus 100, the control apparatus 110, and a printer is shown in the block diagram of Fig. 3. Functional units shown in Fig. 3 may be implemented by hardware or software (computer program). In the latter case, a computer apparatus capable of executing such software is applicable to the management apparatus 100 and the control apparatus 110. An example of the hardware configuration of such a computer apparatus will be explained with reference to the block diagram of Fig. 2. As such a computer apparatus, for example, a general-purpose notebook/desktop personal computer, a server terminal, or a tablet terminal can be applied.

A CPU 101 executes various processes using computer programs and data stored in a RAM 103. The CPU 101 controls the operation of the overall computer apparatus, and also executes or controls various processes that will be explained as processes performed by the management apparatus 100 or the control apparatus 110 to which the computer apparatus is applied.

Setting data of the computer apparatus, computer programs and data regarding activation of the computer apparatus, computer programs and data regarding activation of the computer apparatus, computer programs and data regarding the basic operation of the computer apparatus, and the like are stored in a ROM 102.

The RAM 103 has an area for storing computer programs and data loaded from the ROM 102 and an HDD 104, and an area for storing computer programs and data received from an external device via a network I/F 107. Further, the RAM 103 has an area for storing data received from an external device via an external device I/F 108, and a work area used when executing various processes by the CPU 101. In this manner, the RAM 103 can provide various areas, as needed.

The HDD 104 is an example of a nonvolatile large-capacity information storage device. An OS, computer programs and data for causing the CPU 101 to execute or control various processes that will be explained as processes performed by the management apparatus 100 or the control apparatus 110, and the like are saved in the HDD 104.

A display unit 105 includes a liquid crystal screen or a touch panel screen, and can display the result of processing by the CPU 101 using an image, a text, or the like. Note that the display unit 105 may be a projection device such as a projector that projects an image or a text.

An operation unit 106 is a user interface including a keyboard, a mouse, a touch panel screen, and the like. The user can operate the operation unit 106 to input various instructions to the computer apparatus.

The network I/F 107 is an interface for connecting the computer apparatus to the network 160. The computer apparatus performs data communication with a device on the network 160 via the network I/F 107.

The external device I/F 108 is an interface for connecting, to the computer apparatus, external devices such as the monitor 120, the measurement device 150, and the printers 130a to 130c. The computer apparatus performs data communication with external devices such as the monitor 120, the measurement device 150, and the printers 130a to 130c via a communication bus such as a Universal Serial Bus, USB connected to the external device I/F 108.

The CPU 101, the ROM 102, the RAM 103, the HDD 104, the display unit 105, the operation unit 106, the network I/F 107, and the external device I/F 108 are connected to a system bus 109.

Note that the configuration shown in Fig. 2 is an example of the hardware configuration of a computer apparatus applicable to the management apparatus 100, the control apparatus 110, and a printer, and can be modified/changed, as needed. In some cases, the functional unit in Fig. 3 will be explained as the entity of processing. In practice, the function of the functional unit is implemented by executing a computer program corresponding to the functional unit by the CPU 101.

Next, the operation of the color setting management system according to this embodiment will be explained with reference to the flowchart of Fig. 5A-a.

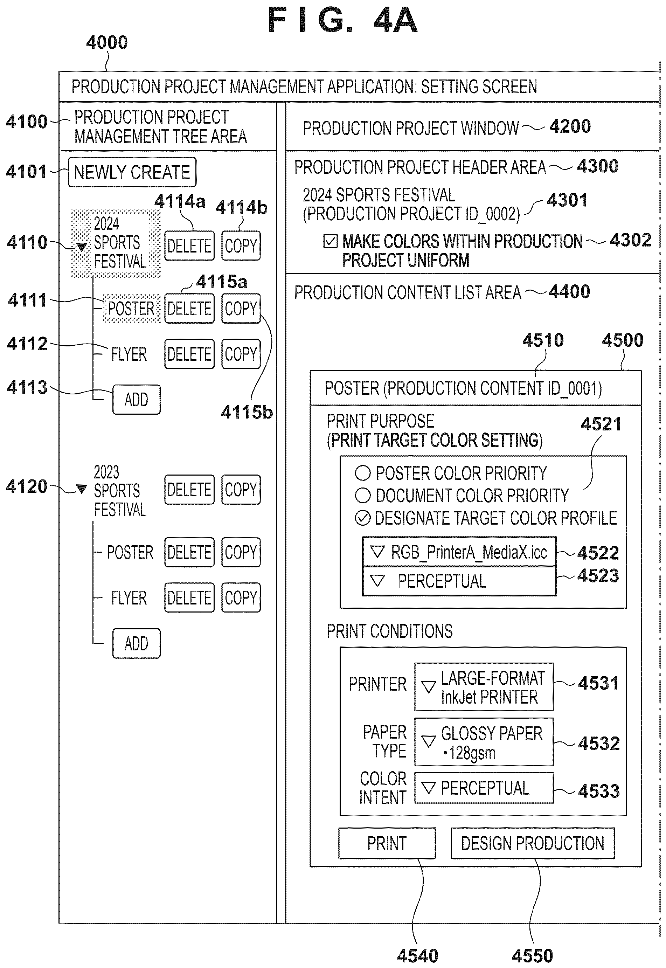

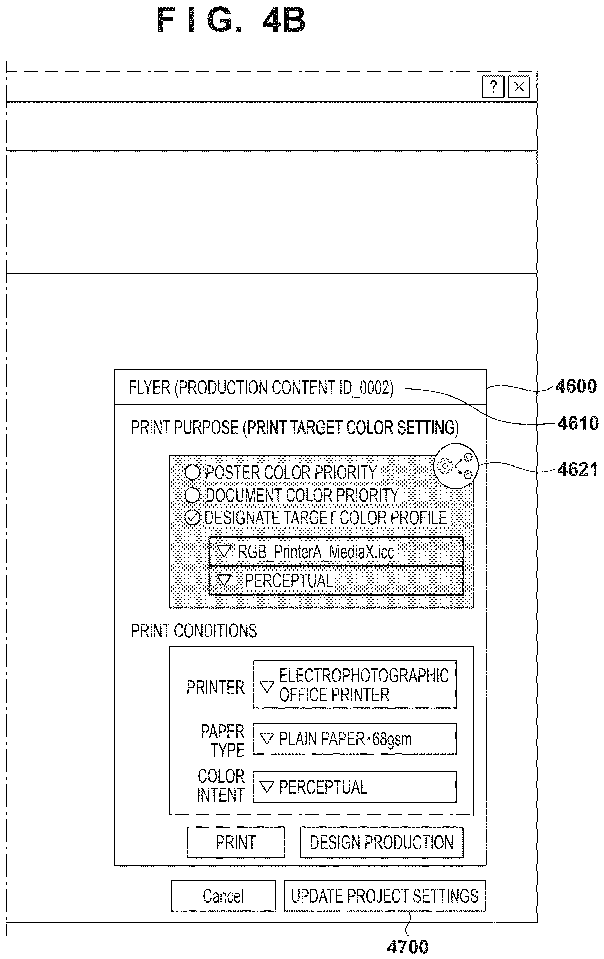

In step S501, a UI control unit 303 of the management apparatus 100 controls the display unit 105 of the management apparatus 100 to display a setting screen 4000 exemplified in Figs. 4A and 4B. The user operates the setting screen 4000 using the operation unit 106 to perform various operations regarding a production project. In response to this, a setting unit 304 performs settings regarding the production project managed by a management unit 301.

After that, the UI control unit 303 performs display control of not only the setting screen 4000 but also a screen on the display unit 105, and acceptance of a user operation to the screen. The setting screen 4000 is a setting screen of an application for managing a production project, and has an area 4100 and a window 4200.

The area 4100 is an area for displaying, for each production project managed by the application, a tree having the production project as a parent node and respective production contents included in the production project as child nodes.

The area 4100 displays a tree having, as a parent node, an icon 4110 corresponding to a production project regarding a sports festival in 2024, and as child nodes, an icon 4111 corresponding to a poster that is a production content included in the production project, and an icon 4112 corresponding to a flyer that is a production content included in the production project. By this tree display, the user can visually recognize that the production project regarding the sports festival in 2024 includes the poster corresponding to the icon 4111 and the flyer corresponding to the icon 4112 as production contents.

The area 4100 displays a tree having, as a parent node, an icon 4120 corresponding to a production project regarding a sports festival in 2023, and as child nodes, an icon corresponding to a poster that is a production content included in the production project, and an icon corresponding to a flyer that is a production content included in the production project. By this tree display, the user can visually recognize that the production project regarding the sports festival in 2023 includes the poster and the flyer as production contents. Note that production contents are not limited to a poster and a flyer, and may be, for example, a single-/double-sided shop card or a brochure or catalog of a plurality of pages.

When the user operates the operation unit 106 to designate a button 4101, the management unit 301 generates a new production project, and the UI control unit 303 displays an icon corresponding to the generated new production project as a parent node in the area 4100.

Buttons 4114a and 4114b are buttons corresponding to the production project regarding the sports festival in 2024, and are buttons for designating deletion and copying of the production project. Such a button is provided for each production project, and when the production project is copied/deleted, similarly copied/deleted. A description regarding copying/deletion of the button will be omitted below.

When the user operates the operation unit 106 to designate the button 4114a, the management unit 301 deletes the production project regarding the sports festival in 2024, and the UI control unit 303 deletes the icons 4110 to 4112 from the area 4100.

When the user operates the operation unit 106 to designate the button 4114b, the management unit 301 copies the production project (including settings) regarding the sports festival in 2024, and the UI control unit 303 copies the icons 4110 to 4112 and displays them in the area 4100.

Buttons 4115a and 4115b are buttons corresponding to the poster that is the production content included in the production project regarding the sports festival in 2024, and are buttons for designating deletion and copying of the poster. Such a button is provided for each production content, and when the production content is copied/deleted, similarly copied/deleted. A description regarding copying/deletion of the button will be omitted below.

When the user operates the operation unit 106 to designate the button 4115a, the management unit 301 deletes the poster that is the production content corresponding to the production project regarding the sports festival in 2024, and the UI control unit 303 deletes the icon 4111 from the area 4100.

When the user operates the operation unit 106 to designate the button 4115b, the management unit 301 copies, as a production content of the production project, the poster (including settings) that is the production content corresponding to the production project regarding the sports festival in 2024. The UI control unit 303 copies the icon 4111 and displays it as a child node of the icon 4110 in the area 4100.

A button 4113 is a button corresponding to the production project regarding the sports festival in 2024, and is a button for designating addition of a production content to the production project. Such a button is provided for each production project, and when the production project is copied/deleted, similarly copied/deleted. A description regarding copying/deletion of the button will be omitted below.

When the user operates the operation unit 106 to designate the button 4113, the management unit 301 adds a production content included in the production project regarding the sports festival in 2024. The UI control unit 303 displays an icon corresponding to the added production content as a child node of the icon 4110 in the area 4100.

The window 4200 has areas 4300 and area 4400, and is an area for displaying information about a production project corresponding to an icon selected by operating the operation unit 106 by the user among the icons of the production project displayed in the area 4100. In Fig. 4A, the icon 4110 is selected, so information of the production project corresponding to the icon 4110 is displayed in the window 4200.

The area 4300 displays, as information 4301 of the production project corresponding to the icon 4110, the name "2024 sports festival" of the production project corresponding to the icon 4110, and a unique management ID issued by the management unit 301 for the production project. Also, the area 4300 displays a checkbox 4302 for setting whether to validate a setting for making color impressions uniform between production contents included in the production project corresponding to the icon 4110.

The area 4400 displays a window 4500 for managing printing of the poster that is the production content included in the production project corresponding to the icon 4110, and a window 4600 for managing printing of the flyer that is the production content included in the production project. The area 4400 also displays a button 4700 for designating updating of print settings regarding the production project corresponding to the icon 4110.

Each of the windows 4500 and 4600 is a window for enabling setting of a print purpose (target color of a production content in printing) and print conditions, a print instruction, and design settings in accordance with a user operation for a corresponding production content.

An area 4510 of the window 4500 displays the name "poster" of the production content, and a unique management ID issued by the management unit 301 for the production content.

The window 4500 has setting portions 4521 to 4523 for setting a print purpose, and setting portions 4531 to 4533 for setting print conditions. Further, the window 4500 has a button 4540 for instructing a printer to print the poster based on the print purpose and the print conditions, and a button 4550 for designating design production of the poster.

The setting portion 4521 is a checkbox group that prompts the user to select the print purpose of the poster, thereby setting a target color corresponding to the selected print purpose. When the user operates the operation unit 106 to select a checkbox "poster color priority", the setting unit 304 sets, as the target color, an eye-catching high-saturation color of a high advertising effect desirable for the poster.

When the user operates the operation unit 106 to select a checkbox "document color priority", the setting unit 304 sets, as the target color, a color that has an impression similar to the monitor display and has a good balance between the readability and discriminability of a text, figure, and graph, and a natural photo tincture.

When a specific printer print color or a target color defined for each use scene is prepared for color experts, the user operates the operation unit 106 to select a checkbox "designate a target color profile". When the checkbox "designate a target color profile" is selected, the setting portions 4522 and 4523 serving as menu buttons become available.

When the user operates the operation unit 106 to designate the setting portion 4522, a list of selectable color profiles is displayed. When the user operates the operation unit 106 to select one color profile from the list, the setting unit 304 sets the selected color profile. The name of the selected color profile is displayed at the setting portion 4522.

When the user operates the operation unit 106 to designate the setting portion 4523, a list of color intents held by the color profile is displayed. When the user operates the operation unit 106 to select one color intent from the list, the setting unit 304 sets the selected color intent. The name of the selected color intent is displayed at the setting portion 4523.

Note that the above selection may be made from preset settings, or an externally imported profile may be selected. From settings (not shown), detailed settings such as paper white simulation and black point correction by known techniques may be performed. The color intent of a target color profile may always be fixed at a specific set value so that the color intent cannot be set. Since the setting (of designating a target color profile) is directed to color experts, display/non-display of the setting item may be switched from a setting (not shown).

The setting portions 4531 to 4533 are a menu button group for prompting the user to set the print conditions of the poster. When the user operates the operation unit 106 to designate the setting portion 4531, a list of available printers is displayed. When the user operates the operation unit 106 to select one printer from the list, the setting unit 304 sets the selected printer as a printer instructed to print. The name of the selected printer is displayed at the setting portion 4531.

When the user operates the operation unit 106 to designate the setting portion 4532, a list of available paper types (kind, grammage, and the like) is displayed. When the user operates the operation unit 106 to select one paper type from the list, the setting unit 304 sets the selected paper type as a paper type used for printing. The name of the selected paper type is displayed at the setting portion 4532.

When the user operates the operation unit 106 to designate the setting portion 4533, a list of available color intents is displayed. When the user operates the operation unit 106 to select one color intent from the list, the setting unit 304 sets the selected color intent as a color intent used for printing. The name of the selected color intent is displayed at the setting portion 4533.

Setting portions for prompting the user to select the print conditions of the poster are not limited to the setting portions 4531 to 4533. For example, a setting portion for setting a paper size, and a setting portion for setting the number of copies may be further added.

Note that selection of a color intent is directed to color experts, so a color intent may always be fixed at a specific set value so that the color intent cannot be set, or may be determined in accordance with the setting of a print purpose. Also, display/non-display of a setting item may be switched from a setting (not shown).

As for the setting of the paper type, the kind and grammage of paper may be separately set. In addition, there may be provided a setting portion for performing, from detailed settings of print conditions (not shown), settings (dither processing, ink amount, restriction of a maximum application amount of toner, the number of print colors, and the like) that influence a print gamut.

Printers selectable from the setting portion 4531 can be selected regardless of possession of a printer and the state of connection to the management apparatus 100/control apparatus 110. Also, printers selectable from the setting portion 4531 are displayed in accordance with statuses such as the history of connection to the management apparatus 100/control apparatus 110/the history of use, during connection/during use, and previous use, so that a printer can be easily selected from many printers. For such a display, there are a display method of displaying selectable printers on the upper/lower side of a printer list displayed by designating the setting portion 4531, and a display method of changing the color of an icon or that of the text of a printer name.

Since the kind and grammage of printable paper change in accordance with printer specifications, paper types selectable from the setting portion 4532 change in accordance with a selected printer.

A print color characteristic (printer profile) and a gamut mapping method in the printer profile are finalized in accordance with the above print conditions (printer, paper type, color intent, and the like).

After the production content settings (print purpose and print conditions) are finalized, a target color, a printer profile, and a gamut mapping method from the target color to the printer profile are finalized. In this embodiment, the use of a large-format inkjet printer capable of printing a poster of a large size such as A1 size is selected as a print condition in the window 4500.

On the other hand, an area 4610 of the window 4600 displays the name "flyer" of the production content, and a unique management ID issued by the management unit 301 for the production content.

The window 4600 displays an icon 4621 representing that the print purpose is the same as that of the poster because the checkbox 4302 is checked.

The window 4600 has a menu button group for prompting the user to set the print conditions of the flyer, a button for instructing a printer to print based on the print purpose and print conditions of the flyer, and a button for designating design production about the flyer.

In the window 4600, an electrophotographic office printer capable of quickly printing many lots of flyers is selected as a print condition. It may be set to selectively use a printer in accordance with a production content in this fashion, or it may be set to use only one printer and selectively use a paper type such as glossy paper for a poster or plain paper for a flyer.

Next, the checkbox 4302 will be explained in more detail. When the user operates the operation unit 106 to check the checkbox 4302, the setting unit 304 validates a "setting for making color impressions uniform between production contents included in a production project corresponding to the icon 4110". In contrast, when the user operates the operation unit 106 to uncheck the checkbox 4302, the setting unit 304 invalidates the "setting for making color impressions uniform between production contents included in a production project corresponding to the icon 4110".

By checking the checkbox 4302, one or more settings (print purpose in Fig. 4A) important for making color impressions uniform can be standardized between production contents included in a production project. This setting may be automatically validated in accordance with design production control by a design production unit 307 in, for example, a case where the design production unit 307 automatically produces derivative contents of a consistent design.

In this embodiment, a print purpose (target color setting in printing) is standardized between the first production content included in a production project and the second production content (production content different from the first production content) included in the production project. The setting unit 304 may arbitrarily determine the first and second production contents among production contents included in a production project. For example, the setting unit 304 may determine, as the first production content, a production content included earlier in a production project, and another production content as the second production content. Alternatively, the setting unit 304 may determine, as the first production content, a production content corresponding to a window designated within the area 4400 by the user using the operation unit 106, and another production content as the second production content.

In the example of Figs. 4A and 4B, the poster is the first production content, and the flyer is the second production content. In this case, the print purpose of the poster corresponding to the first production content is used as the print purpose (target color setting in printing) of the flyer corresponding to the second production content, and the print purpose of the flyer need not be set. Hence, the UI control unit 303 displays, in an inoperable state, the setting portion for setting the print purpose of the flyer. In Fig. 4B, the UI control unit 303 grays out a region (region for setting a print purpose) surrounding the setting portion for setting the print purpose of the flyer, and displays the setting portion in an inoperable state. Further, the UI control unit 303 displays the icon 4621 representing that the setting portion for setting the print purpose of the flyer cannot be operated.

Note that the setting is not limited to this. When the settings of print conditions include the setting of a color intent, even the set value of the color intent may be standardized between production contents in a production project. Alternatively, as shown in Fig. 6, in a screen 6000 for setting detailed options for making color impressions uniform within a production project, a setting item to be standardized may be selected from setting items important for making color impressions uniform.

For example, when the user operates the operation unit 106 to check a checkbox 6001, the setting unit 304 validates a "setting for making color impressions uniform between production contents included in a production project". In contrast, when the user operates the operation unit 106 to uncheck the checkbox 6001, the setting unit 304 invalidates the "setting for making color impressions uniform between production contents included in a production project".

When the user operates the operation unit 106 to check a checkbox 6002, the setting unit 304 validates a "setting for making print conditions (printers) uniform between production contents included in a production project".

When the user operates the operation unit 106 to check a checkbox 6003, the setting unit 304 validates a "setting for making print conditions (paper types (paper kinds)) uniform between production contents included in a production project".

When the user operates the operation unit 106 to check a checkbox 6004, the setting unit 304 validates a "setting for making print conditions (color intents) uniform between production contents included in a production project".

There are roughly three important elements for making color impressions uniform between production contents. The first important element is to physically uniform gamuts. By standardizing materials (color materials and paper colors) used for printing, colors prepared by mixing can be uniformed. To uniform color impressions, printers, paper types (paper kinds), printer settings (not shown) for controlling the number of colors in printing, and the like among print conditions are uniformed between production contents. However, printers and paper are often determined by giving priority to elements other than the elements for making color impressions uniform, so use scenes in which this setting item can be standardized are limited. In a general use scene, production contents give priority not to the viewpoint of making color impressions uniform, but to other viewpoints such as paper size, paper texture, paper thickness, the number of copies, and print cost. In accordance with the other viewpoints, an appropriate printer and paper are determined.

The second important element is to uniform target print colors. A physically implemented gamut greatly differs between the monitor display and printing. In general, settings of a preferable color (target print color) complying with a print purpose (use application) such as poster printing or document printing are prepared. To uniform color impressions, it is important to uniform target print colors between production contents.

The third important element is to uniform rules of gamut mapping from a target print color to a printer gamut. The target print color and the printer gamut are basically different in gamut shape and size, and gamut mapping from a target print color to a printer gamut is necessary. At this time, a plurality of settings are generally prepared so that a preferable color compression rule complying with a use application can be designated. To uniform color impressions, it is important to uniform color intents between production contents.

The configuration for making color impressions uniform between contents in a production project has been explained with reference to Figs. 4A, 4B, and 6. This configuration can easily uniform color impressions between a plurality of content in a production project without requiring an advanced knowledge and skill for color and an individual printing system and without repeating complicated setting for each content.

That is, color setting management for making color impressions uniform can be easily performed in the printing/display system that prints by a combination of a plurality of kinds of printers and various media regardless of the printing system of each printer.

In step S502, if the user designates the button 4550 of the setting screen 4000 using the operation unit 106, the UI control unit 303 of the management apparatus 100 controls the display unit 105 of the management apparatus 100 to display a design production screen (not shown). Then, if the user performs a user operation for production including the design of the poster using the operation unit 106, the design production unit 307 performs design production and editing using a figure, a text, a photo, and the like in accordance with the user operation. Note that the design production unit 307 may have a function of receiving design impression information and pre-produced contents (poster and the like), and automatically producing, by a known technique, derivative contents (flyer, shop card, and the like) of a consistent design in the production project.

Note that the process may return to step S501 during or after content production to update the settings of the production project. When content production is completed in advance, the processing in step S502 is skipped.

In step S503, if the user designates the button 4540 using the operation unit 106, the UI control unit 303 notifies an issuing unit 302 about the designation, and the issuing unit 302 of the management apparatus 100 generates a print job of the poster (content). The print job of the poster includes setting contents such as the print purpose and print conditions set in the window 4500.

Note that the control apparatus 110 (or printers 130a to 130c) executes color conversion complying with the print purpose and print conditions set in the window 4500, so color profiles such as a target color profile and a printer profile are included in a print job, but are not limited to this. For example, it is also possible that color profiles necessary for various content production conditions are installed in advance in the control apparatus 110 and the printers 130a to 130c, and only information for designating a color profile to be used is included in a print job.

When issuing a printing work job from a head office to each shop (each site), production project setting information may be included in job information so that shop-specific additional derivative contents can be produced and managed in the shop with respect to production project settings and basic contents prepared in the head office. The issuing unit 302 transmits the generated print job to the control apparatus 110 via the network 160.

In step S504, the UI control unit 303 of the control apparatus 110 receives the print job transmitted from the management apparatus 100, and controls the display unit 105 of the control apparatus 110 to display the print settings of production contents included in the received print job.

Fig. 8 is a view showing a display example of a screen 8000 for prompting the user of the control apparatus 110 to confirm the print settings of the poster set in the window 4500. The screen 8000 displays some or all the settings of the production project or production contents set in the setting screen 4000.

An area 8001 displays a message for prompting the user (printing company) of the control apparatus 110 to confirm the print purpose and print conditions set in the window 4500 for the poster serving as a production content.

The message represents that a print condition error (paper type error) is generated because a paper type different from the paper type of paper fed in a printer is designated. Thus, the message prompts the user of the control apparatus 110 to change the paper on the printer side in order to continue printing, or to change the print condition from the window 4500 displayed in the screen 8000.

The screen 8000 displays the information 4301 of the poster serving as a production content. In the screen 8000, the checkbox 4302 and its explanation "uniform colors in a production project" are grayed out to protect the checkbox 4302 so that ON/OFF of the checkbox 4302 cannot be changed. In addition, an icon 8004 is displayed.

The window 4500 is displayed in the screen 8000. Since the checkbox 4302 is checked, as described above, the setting portions 4521 to 4523 and 4533 are grayed out and displayed to protect the checkbox 4302 and inhibit a change.

The printing company confirms the message in the area 8001, changes paper fed in a printer designated at the setting portion 4531, or operates the setting portion 4532 using the operation unit 106 of the control apparatus 110 to select the paper fed in the printer.

The UI control unit 303 of the control apparatus 110 communicates with a target printer based on information updated upon accepting update of the setting, confirms whether the print condition error has been canceled, and updates the information of the message in the area 8001.

When the user designates a button 8002 serving as a "button for designating to continue printing" by using the operation unit 106, the UI control unit 303 notifies the setting unit 304 about the designation. Upon receiving the notification, the setting unit 304 finalizes the settings of the production content included in the print job.

Note that when the user designates a button 8003 serving as a "button for stopping printing" by using the operation unit 106, the UI control unit 303 discards the print job, and the process complying with the flowchart of Fig. 5A-a ends.

In step S505, a generation unit 305 of the control apparatus 110 generates a color profile in accordance with the print settings of the production content, or obtains a color profile designated by the print settings from color profiles held in advance. For example, the generation unit 305 generates, from the print purpose (target color) and print conditions (settings regarding a printer profile such as a printer and paper), a color profile for making a color impression uniform with the target color in accordance with the print conditions of the target based on a known technique.

A color conversion unit 306 of the control apparatus 110 performs color conversion of the production content to be printed by using the color profile generated/obtained by the generation unit 305. For example, the color conversion unit 306 performs, in accordance with the conditions set by the setting unit 304, gamut mapping using a target color profile and printer profile generated by the generation unit 305 or prepared in advance. For example, the color conversion unit 306 performs gamut mapping to make the gamut (target color) of the monitor 120 and the gamut of the printer 130a match each other. Note that the method of gamut compression from a target color to a printer can also be changed to be perceptive or a minimum color difference in accordance with the color intent setting. The color conversion unit 306 instructs the printer designated by the print job to print the production content after color conversion.

In step S506, the printer instructed to print among the printers 130a to 130c prints the target production content on a medium such as paper in accordance with the print instruction. Note that the entity of processing in each step of the process complying with the flowchart of Fig. 5A-a is not limited to the above-described example. For example, when the management apparatus 100 and the control apparatus 110 are implemented by one information processing apparatus and the information processing apparatus is arranged in each site, the processes in steps S501 to S505 may be performed in the information processing apparatus, as shown in Fig. 5A-b.

Also, as shown in Fig. 5B, part (for example, step S505) of the processing of the control apparatus 110 may be performed in the printer. Alternatively, all the processing of the control apparatus 110 may be performed in the printer.

The CPU 101 of the control apparatus 110 may communicate with the printer to inquire whether it has the capability of executing color conversion processing using a color profile included in a print job. If the printer has the capability, the CPU 101 of the control apparatus 110 may execute the process complying with the flowchart of Fig. 5A-a or 5A-b, and if the printer does not have the capability, may execute a process complying with the flowchart of Fig. 5B.

This is because, depending on the processing configuration, generation of a quantization error can be suppressed by performing color conversion processing based on the color profile on the printer side, as shown in Fig. 5B, rather than performing color conversion processing by the management apparatus 100/control apparatus 110. Note that the use of production project settings is not limited to a print job, but may also be used in setting of a display color on the monitor display.

As described above, according to this embodiment, setting for easily making color impressions uniform between a plurality of production contents in a production project become possible without requiring an advanced knowledge and skill for color and an individual printing system and without repeating complicated setting for each production content. Print processing can be executed by referring to content setting information having settings standardized through the production project settings.

That is, color setting management for making color impressions uniform can be facilitated in the printing/display system that prints by a combination of a plurality of kinds of printers and various media regardless of the printing system of each printer.

Note that Figs. 4A and 4B show a case where windows corresponding to respective production contents included in a production project corresponding to the icon 4110 are displayed. However, the method of displaying windows corresponding to production contents is not limited to a specific method.

For example, the area 4400 may display the window of a production content corresponding to an icon selected from the icons 4111 and 4112 in accordance with a user operation.

Note that when the UI control unit 303 accepts a user operation to the button 4540 or the button 4550, the setting unit 304 may confirm whether the settings of a production project or those of a production content have been changed. In this case, when it is confirmed that the settings have been changed, the UI control unit 303 may display, on the display unit 105, a screen for prompting the user to confirm whether to approve update of the settings before shifting to printing/design production.

Even after a user operation to the button 4540 or the button 4550, the settings of a production content may be changed later, unless the production content is being printed. Even after issuing a job, the settings may be updated as long as the job is not completed yet.

### (Second Embodiment)

In the following embodiments including the second embodiment, a difference from the first embodiment will be explained, and the rest is similar to the first embodiment, unless otherwise specified. The first embodiment has described the configuration in which the checkbox 4302 for setting to uniform the colors of respective production contents included in a production project is provided to enable the setting for making color impressions uniform between production contents included in a production project without any advanced knowledge and skill, and complicated procedures. The second embodiment will describe optional settings helpful for making color impressions uniform even in an applied use case.

This embodiment will explain a case where a setting screen 4000 exemplified in Figs. 7A and 7B is used instead of the setting screen 4000 in Figs. 4A and 4B. In Figs. 7A and 7B, the same reference numerals as those in Figs. 4A and 4B denote the same components, and a description of these components will be omitted.

A checkbox 4302 is a checkbox for setting to uniform the colors of respective production contents included in a production project. When the user operates an operation unit 106 to check the checkbox 4302, a UI control unit 303 displays a list 4303. The list 4303 is a list that displays a list of candidate settings serving as candidates of the setting for making colors uniform between production contents in a production project corresponding to an icon 4110. The list 4303 includes "standard settings" serving as settings prepared in advance, "previous settings (2023 sports festival)" serving as settings made before for a production project regarding the sports festival in 2023, and settings made for other existing production projects.

When the user selects any of the settings using the operation unit 106, a setting unit 304 changes, to the selected setting, the setting for making target print colors uniform between production contents. For example, when the user selects the settings of an existing production project from the list 4303 using the operation unit 106, a management apparatus 100 regards the same settings as those of the existing production project as standardization targets, and refers to standardized set values at that time. For example, a setting item to be standardized, for example, a target print color is validated in accordance with the settings of the existing production project selected in accordance with the user operation. If the set value of the target print color serving as a setting item to be standardized is poster color priority, the poster color priority is applied to even a new production project.

Note that the list 4303 may include, for each setting, a setting portion capable of adjusting a set value at the setting, and a setting portion capable of changing to a screen on which the set value can be adjusted.

When the checkbox 4302 is checked, checkboxes 4501 and 4601 are validated. When the user checks the checkbox 4501 using the operation unit 106, it is set to include the poster in "production contents whose colors are uniformed". In contrast, when the user checks the checkbox 4601 using the operation unit 106, it is set to include the flyer in "production contents whose colors are uniformed".

Such a setting portion for selecting a production content to be included in "production contents whose colors are uniformed" in accordance with a user operation is a setting portion used when the user wants to manage production contents at once as a production project, but the production contents include a production content for which it is not important to uniform color impressions.

Note that when the user unchecks the checkbox 4501 using the operation unit 106, the window 4500 may be grayed out and displayed. Similarly, when the user unchecks the checkbox 4601 using the operation unit 106, the window 4600 may be grayed out and displayed. By this processing, the setting for making colors uniform between production contents can be performed for only production contents selected in accordance with a user operation from production contents included in a production project.

When the checkbox 4302 is checked, checkboxes 4502 and 4602 are validated. When the user checks the checkbox 4502 using the operation unit 106, the poster is set as the first production content (first priority content), and the flyer is set as the second production content. To the contrary, when the user checks the checkbox 4602 using the operation unit 106, the flyer is set as the first production content, and the poster is set as the second production content.

In a production project, the first priority content serving as a theme may exist among a plurality of content, and priority is given to the setting of the production content serving as the theme in making color impressions uniform. A set value for the production content designated as the first priority content can be standardized for other production contents in the production project.

Next, a checkbox 4304 will be explained. As in the use cases described with reference to Figs. 5A-A, 5A-B, and 5B, a head office worker who sets a production project and performs design production, and a shop worker who performs printing work using a printer in each shop may be different. The checkbox 4304 is used to apply setting protection so that the shop worker (production content printing side) cannot change, in printing work, settings regarding the setting for making color impressions uniform, which are defined in production project settings by the head office worker.

When the user checks the checkbox 4304 using the operation unit 106, it is set to apply setting protection. When the user unchecks the checkbox 4304, it is set not to apply setting protection.

Note that setting protection is made for even a production content. For example, as for a production content produced by a head office worker, the content protection setting may be so made as to inhibit a shop worker from changing or copying the production content, or allow the shop worker to only use a copy or add a new content.

In this manner, according to this embodiment, the above-described additional optional settings are provided for a production project or production contents, so the setting for making color impressions uniform can be set flexibly and easily in accordance with a use case.

### (Third Embodiment)

The first embodiment has described the configuration in which the checkbox 4302 for setting to uniform the colors of respective production contents included in a production project is provided to enable the setting for making color impressions uniform between production contents included in a production project without any advanced knowledge and skill, and complicated procedures. The third embodiment will explain a configuration in which when design production of production contents is automatically generated based on the concept and impression of a production project, setting control for making color impressions uniform between production contents is automatically performed.

For example, a design production unit 307 accepts input of a produced content from a UI control unit 303, analyzes the impression of the produced content by a known method, and generates a derivative content.

Upon generating the derivative content from the produced content, a management unit 301 adds the derivative content to a production project to which the produced content belongs. For the produced content and the derivative content, a setting unit 304 validates the setting for making color impressions uniform in the production project.

Alternatively, the design production unit 307 accepts, from the UI control unit 303, input of impression information of a design to be produced, and automatically generates a plurality of production contents of a designated kind by a known method.

The management unit 301 combines the generated production contents into one production project, and the setting unit 304 validates the setting for making color impressions uniform between the generated contents.

The operation of a color setting management system according to this embodiment will be explained with reference to the flowchart of Fig. 9. In step S901, the UI control unit 303 of a management apparatus 100 accepts the settings of a production project input by the user using an operation unit 106. If the UI control unit 303 accepts designation of setting information of producing three kinds (content kinds) of production contents, that is, a poster, a flyer, and a card, the setting unit 304 sets information representing the designated kinds of production contents in the production project setting information. In the example of Fig. 9, the management unit 301 manages the production project setting information including the project name and the content kinds.

In step S902, the UI control unit 303 of the management apparatus 100 accepts the setting of "impression information of a design to be produced" input by the user using the operation unit 106. The impression setting of the design may be designated from choices on a screen (not shown), or a produced content (poster) may be designated to use the impression of the produced content, as shown in Fig. 9.

If the UI control unit 303 accepts designation of the impression information of the design of content to be produced, the setting unit 304 sets the designated impression information of the design and the like in the production project setting information. The management unit 301 manages the production project setting information.

If the UI control unit 303 accepts an automatic design generation instruction input by the user using the operation unit 106, an issuing unit 302 issues an automatic design generation job including the production project setting information to the setting unit 304.

In step S903, upon accepting the automatic design generation job issued from the issuing unit 302, the setting unit 304 of the management apparatus 100 generates (automatic content generation) a production content of a kind that needs to be generated, by using a known technique in accordance with the production project setting information included in the automatic design generation job. Note that when impression information is designated in a produced content, the design production unit 307 analyzes the impression of the produced content using a known technique, extracts impression information, and uses it for generation of a production content. Then, the design production unit 307 adds, to the production project setting information, content information 910 representing the generated production content.

In step S904, the setting unit 304 of the management apparatus 100 accepts automatic generation information of the production content in step S903 from the design production unit 307. Upon accepting the automatic generation information of the production content, the setting unit 304 updates the production project setting information so as to uniform color impressions between production contents in response to the automatic generation of the production contents based on the common impression information. More specifically, a setting 980 in the production project setting information for making colors uniform in a production project is validated. Note that settings updated along with automatic generation of contents are not limited to the setting 980 for making colors uniform in a production project. Settings may be updated even for setting protection, settings regarding the setting for making color impressions uniform, which have been described in the above embodiments, and the like. The setting unit 304 may set a print purpose and print conditions based on the production project setting information and impression information extracted from the produced content in step S903. For example, when a production content used for promotion and advertisement such as a poster is included, or an impression extracted by analysis uses an eye-catching high-saturation color, the print purpose is set to poster color priority. Also, upon accepting automatic content generation information of content, control of the management unit 301 may be switched by an optional setting (not shown). There may be a setting of always automatically updating production project settings or not, a setting of executing update confirmation, and the like.

As described above, this embodiment is characterized by the configuration in which, when design production of production contents is automatically generated based on the concept and impression of a project, setting control for making color impressions uniform between production contents is automatically performed. Hence, the setting for easily making color impressions uniform becomes possible for production contents in a production project without requiring an advanced knowledge and skill for color and an individual printing system and without repeating complicated setting for each production content.

### (Fourth Embodiment)

The third embodiment has described the configuration in which when design production of production contents is automatically generated based on the concept and impression of a production project, setting control of making color impressions uniform between the production contents is automatically performed.

The fourth embodiment will explain control of color management setting based on a start instruction not to WEB/SNS digital contents, but to print content production of a flyer, poster, and the like or set production of a plurality of content including print contents.

When design production of a plurality of content is executed on one display, the display color of the same color signal is generally the same even for different contents because the number of gamuts of the display device is one. To the contrary, when a design on the display is printed by a printer, the color changes because the gamut and the like are different between the display and the printer. However, in printing using the same printer and the same paper, the print color of the same color signal is reproduced by almost the same color except a change caused by variations of printer characteristics or the like unless print settings are changed.

Till printing, a general user does not notice a gamut difference generated depending on the kind of production content upon a change of print conditions such as a printer, paper, and print settings, or a change of the print color even for the same signal.

As described above, it is hard for the user to have a motivation to perform color management setting before printing in consideration of a change of the print color caused by a difference in print conditions in print content production in a conventional color setting management system.

Therefore, the following problems specifically arise. In content production, there are a case where production of a plurality of content starts as planned, and a case where the reaction of the market is checked upon production, and then contents are additionally produced. If production is performed as planned, it can be planned to perform test printing of one copy and confirm the copy when digital data of a plurality of content are finished. This allows the user to notice a difference in print color before actual printing of a large amount. However, in many cases, when the user notices a difference in print color between a plurality of content, a large necessary number of copies of the first content have already been printed. That is, the print color of the first content cannot be changed unless the first content is printed again at a cost.

Thus, color management is required to make the print color of the second content to be printed close to that of the first printed content. However, color management at standard color settings is executed for each print job by an individual printer. It is therefore difficult for an application to specify later a printer and a print job used to print the first printed content, and obtain information such as a target color upon printing the first content.

When the application does not perform color management on the print color of the first content, information such as a target print color upon printing the first content cannot be obtained. Hence, color management to make the print color of the second content close to that of the first content is difficult.

This embodiment is characterized by providing a production menu for starting to-be-printed content production or content production including a to-be-printed set, and performing control of color management setting of a print color.

The operation of a color setting management system according to this embodiment will be explained with reference to the flowchart of Fig. 20.

In step S2001, a UI control unit 303 of a management apparatus 100 controls a display unit 105 of the management apparatus 100 to display a start wizard screen 10000 of a production project exemplified in Figs. 10A and 10B. The user operates the screen 10000 using an operation unit 106, and performs various operations regarding the production project. A setting unit 304 performs settings regarding the production project managed by a management unit 301.

Details of Figs. 10A and 10B will be explained. The start wizard screen 10000 has areas 10100, 10200, 10300, 10400, and 10500.

The area 10100 has buttons for narrowing down and specifying the kind of content to be produced. The area 10100 has a button 10101 for narrowing down contents to those to be printed such as a flyer and a poster, a button 10102 for narrowing down contents to SNS contents, and a button 10103 for narrowing down contents to marketing contents including a Web page and a display advertisement. However, the buttons are not limited to them. In Figs. 10A and 10B, the button 10101 is selected, and the UI control unit 303 displays, in the area 10200, buttons and the like for narrowing down the kind of print contents to be produced.

The area 10200 has a button 10201 for performing set production of a plurality of consistent contents designed with a worldview based on one theme as print contents. Also, the area 10200 displays production samples 10203 corresponding to the respective buttons in order to assist the user to image a product and press a button. In Figs. 10A and 10B, two kinds of set production samples, that is, a three-piece set of a poster, flyer, and shop card and a two-piece set of an envelope (front and back) and flyer are displayed. However, samples are not limited to them, and this is merely a sample display. Further, the area 10200 has one-piece content buttons 10202 for a flyer, a poster, card, an envelope, and another as print contents, and a production sample 10204 corresponding to each button. Note that a plurality of one-piece content buttons 10202 can be simultaneously selected. When a plurality of one-piece contents are simultaneously selected, the UI control unit 303 confirms with the user by a confirmation screen (not shown) whether the user desires consistent set production with a worldview based on one theme. If the button 10201 is designated on a screen (not shown), the UI control unit 303 cancels selection of the one-piece content button 10202, and switches it to selection of the button 10201. In addition, the UI control unit 303 hands over pieces of one-piece content information selected in the area 10200 to setting information of the area 10300 to be described later, and sets them in the selection state.

In Figs. 10A and 10B, the button 10201 is selected, and the UI control unit 303 displays, in the area 10300, buttons and the like for selecting print contents subjected to set production.

The area 10300 has buttons 10301 for a flyer, a poster, a card, an envelope, and another, and displays production samples 10302 corresponding to the respective buttons. In Figs. 10A and 10B, the flyer and envelope buttons 10301 are selected, and the UI control unit 303 displays, in the area 10400, buttons 10401 for narrowing down templates to those used for the designs of a flyer and envelope to be produced. The area 10400 has an area 10410 for template display in a workflow of derivatively performing set production after producing one content, and an area 10420 for template display in a workflow of performing set production from the impression of a set state. The area 10410 displays templates 10411 and 10412 respectively for a flyer and envelope selected in the area 10300. The area 10420 displays a template 10421 for a two-piece set of a flyer and envelope selected in the area 10300. Note that as for templates displayed in the areas 10410 and 10420, the kinds of contents and the number of templates displayed at once change in accordance with the kinds of contents selected in the area 10300 and the number of selected contents.

Assume that only one template can be selected from templates displayed in the two areas 10410 and 10420. In Figs. 10A and 10B, one of set production templates in the template 10421 is selected.

As a result, an outline of production contents is determined, and the UI control unit 303 validates (allows pressing) a button 10600 for starting design production.

In this embodiment, a set production button for creating a worldview based on one theme by a plurality of content is provided in a menu for production contents, in addition to one-piece content buttons, a plurality of which can be simultaneously selected. Further, the set production menu displays the production sample 10203 evoking an image consistent between a plurality of content. This embodiment has one feature in which whether there is a user request to uniform print colors between contents can be confirmed based on designation of the set production button before design production or before printing.

In set production, there are provided the workflow (area 10410) of producing one content and derivatively performing set production, and the workflow (area 10420) of performing set production from the impression of a set state based on a plurality of content. This embodiment also has one feature in which flexible set production is possible in accordance with a use case by the two workflows. Even in set production of producing a derivative content later, user confirmation in which color information in printing an original content is managed so that it can be referred to can be performed on the assumption that print colors are uniformed between contents.

When the user operates the operation unit 106 to designate the button 10600 for starting design production of a target content, various kinds of selected information on the start wizard screen 10000 are transferred to the setting unit 304. The setting unit 304 reflects various kinds of selected information on the start wizard screen 10000 in production project settings managed by the management unit 301.

Note that a supplementary explanation of the area 10500 in the start wizard screen 10000 will be given, which is not important in the feature explanation of this embodiment. The area 10500 has buttons for a management menu.

The UI control unit 303 of the management apparatus 100 accepts pressing of a production project setting management button 10501 to display a setting screen 4000 described in the first embodiment on the display unit 105 of the management apparatus 100. A production project may also be set from the setting screen 4000 without using the start wizard screen 10000.

The UI control unit 303 of the management apparatus 100 accepts pressing of a print condition set setting management button 10502 to display on the display unit 105 of the management apparatus 100 a screen for managing a plurality of print conditions at once. A print condition set can be managed regardless of the kind or design of a production content, details of which will be explained as a feature of not this embodiment but another embodiment to be described later.

Note that invoking of production project setting management and print condition set setting management is not limited to invoking from the start wizard screen 10000. Production project setting management and print condition set setting management can also be invoked by the management menu button (not shown) of a production project management application or the like at a time other than the start of a production project.

In step S2002, the UI control unit 303 confirms the production project settings in step S2001. If the production contents include print contents, it is confirmed with the user whether the management unit 301 need not perform color management in printing. By performing color management in printing by the management unit 301, the management unit 301 can obtain information such as a target color in past printing even after content printing. When executing additional derivative content production, colors in the production project including printed contents can be uniformed by referring to the printed content information.

More specifically, when the production contents include print contents, the UI control unit 303 displays a setting confirmation screen 11000 exemplified in Fig. 11A on the display unit 105 of the management apparatus 100.

The setting confirmation screen 11000 has an area 11002, a button 11001 for selecting a color management method, and a checkbox 4302 for the setting for making colors uniform in a production project. The button 11001 enables selecting whether to execute color management in printing by the management unit 301 (to perform color management on the application side) or not to execute it (to perform color management on the printer side). The UI control unit 303 can switch the display contents of the area 11002 in accordance with the setting conditions of a production project. As for selection of the color management method and the setting for making colors uniform in a production project, the UI control unit 303 can change the setting state at the time of activating the screen in accordance with the setting conditions of a production project.

Note that when the production project settings aim at set production including at least one print content, as shown in Figs. 10A and 10B, it is highly likely to require making colors uniform in a production project. Thus, when the production project settings aim at set production including at least one print content, the UI control unit 303 displays the setting confirmation screen 11000 exemplified in Fig. 11B on the display unit 105 of the management apparatus 100. At this time, the UI control unit 303 sets the setting of selection of the color management method to be the setting of performing color management by the management unit 301 (performing color management on the application side). In addition, the UI control unit 303 validates the checkbox 4302 for the setting for making colors uniform in a production project.

Note that it is not essential to automatically change the setting state in accordance with the setting conditions of a production project.

This embodiment has one feature in which when production contents are print contents or set production, it is confirmed with the user whether the management unit 301 need not perform color management in printing in preparation for printing of making colors uniform between a plurality of content.

Note that when production contents are set production, the setting of the color management method and the setting for making colors uniform in a production project inherit settings of an original content in derivative content production in which, for example, the kind of content is added. Alternatively, the inheritance of settings may be confirmed with the user from a screen (not shown). Even for additional derivative contents, an error of the setting for making colors uniform between contents can be suppressed.

Step S502 and subsequent steps are similar to those in the first embodiment, and a description thereof will not be repeated. Note that steps S2001 and S2002 may be executed not only by the management apparatus 100, but also by a control apparatus 110 or a printer.

As described above, this embodiment has explained control in which there are provided menus for to-be-printed content production and content production of a set including to-be-printed contents, and the color management setting of a print color is confirmed with the user before design production or before printing. Even in set production or when performing additional derivative production later, color management can be performed to uniform colors between production contents while suppressing reprinting.

### (Fifth Embodiment)

The fourth embodiment has described control of color management setting based on a start instruction to to-be-printed content production, and content production of a set including to-be-printed contents.

The fifth embodiment will explain control in which settings regarding color management such as a plurality of print conditions are managed, registered, and shared for each set regardless of the kind or design of a production content, and are used in printing by a printer. Note that the use of a registered print condition set is not limited to printing by a printer, and the registered print condition set may be used to simulate a print color on a display.

In content production, while a possessed printer is used, the kind of paper including the thickness, size, material, and texture of paper is often determined first in accordance with the kind and use scene of content before detailed design production. That is, when producing a set of a plurality of content as planned, a printer and paper to be used are often determined in advance.

However, the gamut differs between printers in accordance with paper, so individual optimal color management may be executed. If printing is performed by a standard method, the consistency may be greatly degraded between contents when producing a set. Even in printing with the setting for making target print colors uniform, it becomes difficult to suppress a setting error in printing while repeating, a plurality of times, work of designing and printing contents.

Note that in a use case regarding printing by a plurality of users or in a plurality of sites, print conditions further become complicated, making it hard to suppress a setting error in printing. For example, when a plurality of content are produced for one theme, a plurality of designers sometimes share content production to print by the printers and paper sheets of the respective designers. Also, content printing is sometimes performed using printers and paper sheets in respective sites between a design producer, a design approver, a design production client, and a printing company, between a franchise head office and a franchised store, or the like. In such a use case, print conditions vary, and it is hard for respective printing companies to perform color management so as to uniform colors with a common understanding in printing without a setting error.

This embodiment is characterized by performing control in which settings regarding color management such as a plurality of print conditions are managed, registered, and shared for each set regardless of the kind or design of a production content, and are used in printing by a printer.

The operation of a color setting management system according to this embodiment will be explained with reference to the flowchart of Fig. 13. Only steps different from those in the above-described embodiments will be explained.

In step S1301, if the user designates a print condition set setting management button 10502 using an operation unit 106, a UI control unit 303 of a management apparatus 100 controls a display unit 105 of the management apparatus 100 to display a print condition set setting management screen 14000 in Fig. 14. Then, the user operates the screen 14000 using the operation unit 106 to perform various operations regarding a print condition set. A setting unit 304 performs settings regarding the print condition set managed by a management unit 301. Note that registration of the print condition set in step S1301 need not always be executed before step S2001, and may be executed during production project setting in step S2001. Registration of the print condition set in step S1301 may also be executed in step S1302 (to be described later).

Details of Fig. 14 will be explained. The print condition set setting management screen 14000 has areas 14100 and 14200. The area 14100 displays a tree having the creation year or update year of print condition set setting information as a parent node 14110, and an icon corresponding to a created or updated print condition set as a child node 14111.

When the user operates the operation unit 106 to designate a button 14101, the management unit 301 generates a new print condition set. The UI control unit 303 displays a creation year corresponding to the generated new print condition set as a parent node in the parent node 14110. Further, the UI control unit 303 displays an icon corresponding to the generated print condition set as a child node in the child node 14111.

When the user operates the operation unit 106 to designate a button 14102, the UI control unit 303 displays a setting window 12000 in Fig. 12 for performing reading/registration of the print condition set based on commercial product information. Upon accepting setting information from the setting window 12000, the management unit 301 generates a new print condition set. The UI control unit 303 displays a creation year corresponding to the generated new print condition set as a parent node in the parent node 14110. Further, the UI control unit 303 displays an icon corresponding to the generated print condition set as a child node in the child node 14111. Note that details of the button 14102 for reading/registration from commercial product information and the setting window 12000 in Fig. 12 will be described in another embodiment.

A button 14112 is a button corresponding to a print condition set "∘∘ production project case 2024.11", and is a button for designating deletion of the print condition set. Such a button is provided for each print condition set, and when deletion of a print condition set is designated, similarly deleted.

The area 14200 is an area for displaying information about a print condition set corresponding to an icon selected by operating the operation unit 106 by the user among the icons of print condition sets displayed in the area 14100. In Fig. 14, the icon of the child node 14111 is selected, so information of a print condition set corresponding to the icon of the child node 14111 is displayed in the area 14200.

In the area 14200, a print condition set name setting 14201, a setting 4520 regarding a print purpose (target color in printing), and settings regarding a plurality of print conditions (print condition name, printer, paper, output size, and the like) 14210 can be performed.

In Fig. 14, the print condition set name "∘∘ production project case 2024.11" is displayed at the print condition set name setting 14201 as information of the print condition set corresponding to the icon of the child node 14111. In addition, a unique management ID 14202 issued by the management unit 301 for the print condition set is displayed.

The setting 4520 regarding a print purpose is a setting regarding a target color in printing, and is commonly applied to a plurality of print conditions included in the print condition set. Note that in Fig. 14, one setting 4520 regarding a print purpose can be selected from a plurality of choices, but choices are not always necessary. To uniform colors for a plurality of print conditions, only one kind of setting 4520 regarding a print purpose may be fixed without any choice as long as it is common to a plurality of print conditions.

In Fig. 14, two print conditions, that is, print condition 1 (14210) and print condition 2 (14220) are registered, and the setting 4520 regarding a print purpose is commonly applied in the two print conditions. Note that the number of print conditions is not limited to two, and a print condition can be added with a print condition addition button 14230. It is also possible to delete a registered print condition with as deletion button (not shown). Details of settings in the setting 4520 regarding a print purpose have already been described in the above embodiments, and will not be repeated.

In the area of the print condition 1 14210, settings regarding one print condition such as a print condition name setting 14211, a printer 14212, paper 14213, and an output size 14214 can be performed. Settable conditions are not limited to them, and there may be information about the installation location of a printer, and a printer setting regarding a print quality.

In Fig. 14, as information of the print condition 1 (14210), a print condition name "designer home print environment" is set and displayed in the name setting 14211, and "printer A" is set and displayed in the printer 14212. Also, "medium A" is set and displayed in the paper 14213, and "A4" is set and displayed in the output size 14214. As information of the print condition 2 (14220), print conditions in a design office print environment are set.

When the user operates the operation unit 106 to designate a button 14302, the setting unit 304 registers and updates, based on setting information in the area 14200, setting information of a print condition set selected in the area 14100 managed by the management unit 301.

When the user operates the operation unit 106 to designate a button 14301, the setting unit 304 stops registration and update based on setting information in the area 14200 for setting information of a print condition set selected in the area 14100 managed by the management unit 301.

Note that setting of a print condition set need not always be closed by only one user, but may be commonly used between a plurality of sites or a plurality of members. For example, print conditions may be set and commonly used such that print condition 1 is a condition recommended by a franchise head office, print condition 2 is a print condition in a franchised store A, and print condition 3 is a print condition in a franchised store B. By sharing print conditions between a franchise head office and franchised stores, the target color setting in printing can be standardized, and the use of recommended print conditions including a printer and paper can be promoted. While adapting to the actual situation of a printer and paper in each franchised store, print conditions in franchised stores are patterned and standardized, thereby suppressing variations in print quality between franchised stores.

As another use case, when collaboratively producing a plurality of designs of the same theme by a plurality of designers, print conditions may be shared and used such that print condition 1 is set for the design producer of a poster, print condition 2 is set for the design producer of a flyer, and print condition 3 is set for the design producer of a ticket.

Note that information to be shared is not limited to conditions in printing, but parameters used for color conversion such as a target color profile corresponding to a print purpose setting and a printer profile corresponding to print conditions such as a printer and paper may be shared. By sharing various profiles, the finish of printing intended by each design producer can be displayed on the designer's display by printing simulation using a profile. As a result, a rough quality can be confirmed between members anytime and anywhere.

Steps S2001 to S502 are similar to those in the above embodiments, and a description thereof will not be repeated.

Subsequently, in step S1302, the user operates the operation unit 106 to make settings for printing based on design data created in step S502, and issue a print job. Upon receiving a print setting instruction from the operation unit 106, the UI control unit 303 controls the display unit 105 of a control apparatus 110 to display a production content print setting screen 15000 exemplified in Figs. 15A and 15B. The user operates the screen 15000 using the operation unit 106 to perform various operations regarding print settings and issuance of a print job. Then, the setting unit 304 sets print conditions for production contents to be printed. An issuing unit 302 issues a print job to the control apparatus 110 in accordance with the print condition settings set by the setting unit 304.

Note that this embodiment has one feature in which one print condition is selected from print condition sets registered in step S1301 to print.

Details of Figs. 15A and 15B will be described. The screen 15000 has areas 15100, 15200, and 15300. The area 15100 is an area for displaying a print preview of a production content for which a print job is issued.

The area 15200 is an area for setting detailed print conditions for a production content to be printed by using the operation unit 106, and issuing a print job with a print button 15302.

In print condition settings, a setting 15210 for using a print condition set, a printer 15211 to be used, a paper feed method 15212 in a printer, an output paper size (output size) 15213, a print copy count 15214, and the like can be set. With a return button 15301, the screen can return to the design production screen in step S502. In Fig. 15A, the setting 15210 for using a print condition set is valid. Thus, setting information of the printer 15211 and output size 15213 whose set values are referred to and used from information of a print condition set and reflected in the display are grayed out so that they cannot be directly designated.

The area 15300 is a detailed setting area of a print condition displayed when the setting 15210 for using a print condition set is validated. The user selects a print condition set name to be used from a list 15310 using the operation unit 106. With a radio button 15320, the user selects one print condition from print conditions (for example, 14210 and 14220) included in the selected print condition set.

The area 15300 is a detailed setting area of a print condition. To prevent a work error caused by an easy setting change, the settings of a print purpose and print condition included in a print condition set are locked in the area 15300 so that they cannot be directly changed. When a print condition set needs to be changed, an edit button 15311 is pressed in a state in which the print condition set is selected from the list 15310, thereby activating, for example, the print condition set setting management screen in Fig. 14, and changing and updating the print condition set. Even when no print condition set is registered in step S1301, a print condition set can be newly registered in step S1302 by pressing a new button 15312 to activate, for example, the print condition set setting management screen in Fig. 14.

As described above, in step S1302, the user operates the operation unit 106 to designate print conditions in the areas 15200 and 15300. In response to the designation of the print button 15302, the setting unit 304 sets print conditions selected in the areas 15200 and 15300, and the issuing unit 302 issues a print job to the control apparatus 110.

Steps S504 to S506 are similar to those in the above embodiments, and a description thereof will be omitted.

Note that steps S1301 and S1302 are performed by the management apparatus 100 in the above description, but are not limited to this and may be executed by the control apparatus 110 or a printer.

As described above, this embodiment has explained control in which settings regarding color management such as a plurality of print conditions are managed, registered, and shared for each set regardless of the kind or design of a production content, and are used in printing by a printer. This can suppress a setting error by a printing company in printing, and color management can be performed to uniform colors.

### (Sixth Embodiment)

The fifth embodiment has explained control in which settings regarding color management such as a plurality of print conditions are managed, registered, and shared for each set regardless of the kind or design of a production content, and are used in printing by a printer.

The sixth embodiment will explain control in which setting of a print condition set is performed based on commercial product information of a production kit constituted by a combination of a plurality of kinds of paper sheets.

For production contents, the kind of paper is often changed in accordance with the kind of content. However, components regarding color perception such as the whiteness and surface property of paper, the amount of fluorescent whitening agent, the amount of color material applicable by a printer, and color development upon applying a color material greatly change depending on paper. To uniform color impressions between contents, selection of a combination of paper sheets to be used is important, which requires knowledge and skill. Further, print settings for making color impressions uniform between contents need to be set in printing each content, and it is difficult to work without an error.

In this embodiment, a production kit sales system (not shown) provides a standard production kit constituted by a combination of a plurality of kinds of paper sheets considering making color impressions uniform between contents.

A management apparatus 100 is characterized by accepting production kit information, referring to a use printer and paper information linked to the production kit information from a production kit information database (not shown), and registering each print condition setting of a print condition set.

The operation of a color setting management system according to this embodiment will be explained with reference to Figs. 12 to 14 and 19A to 19C.

In the fifth embodiment, setting registration of a print condition set is executed by setting the area 14200 of the print condition set setting management screen 14000 in step S1301.

In the sixth embodiment, when the user designates a button 14102 using an operation unit 106, a UI control unit 303 of the management apparatus 100 controls a display unit 105 of the management apparatus 100 to display a production kit use registration screen 12000 in Fig. 12. Note that the production kit use registration screen 12000 is activated from a print condition set setting management screen 14000, but may also be activated directly from a setting menu.

Details of Fig. 12 will be explained. In the production kit use registration screen 12000, a setting unit 304 of the management apparatus 100 can register the use of a production kit using three methods. The first method is to register the use by reading a barcode attached to the commercial product of a production kit using a reading device (not shown) upon receiving designation of a barcode reading button 12001 by the operation unit 106. The second method is to register the use by inputting a unique ID attached to the commercial product of a production kit to production kit ID designation 12002. The third method is to register the use by selecting a production kit from a standard production kit name list 12003 registered in a production kit information database (not shown).

Fig. 12 shows a state in which "office printer 1/large-format IJ printer 1_standard production kit A" is selected from the list 12003. Upon accepting designation of an OK button 12005 by the operation unit 106, a management unit 301 obtains production kit information linked to the designated production kit name from the production kit information database (not shown). Based on the obtained production kit information, the production kit is automatically reflected as setting information corresponding to a print condition set setting area 14200. Upon receiving designation of a return button 12004, registration of the use of the production kit is stopped, and the screen returns to the print condition set setting management screen 14000.

Figs. 19A to 19C show examples of production kit information. Note that a production kit is constituted by a plurality of kinds of paper sets complying with use applications (kinds of contents). Fig. 19A shows a production kit for set production of a flyer and envelope. Fig. 19B shows a production kit for set production of a flyer and shop card. Fig. 19C shows a production kit for set production of a flyer, shop card, envelope, and poster. In addition, the paper constitution can be customized in accordance with contents subjected to set production, such as set production of a flyer, thicket, and poster.

Note that each paper is different in print gamut in accordance with a use printer, in addition to recommendation/non-recommendation and available/unavailable. Thus, information about a use printer is also held as part of paper information. In set production, a plurality of kinds of printers are sometimes used separately in accordance with the sizes and kinds of contents. A production kit can be constituted by paper sheets of a plurality of use printers.

Production kit information holds, as information of each paper, a use printer name, a printer ID, a use application example, a paper name, a paper ID, a paper size, a paper grammage, a paper surface property, paper color, and the like, in addition to a production kit name/production kit ID. The production kit information may hold a printer profile including a use printer and paper, and target print color profile information in the use of a production kit designated by the production kit sales system (not shown). Further, the production kit information may hold information about the amount of fluorescent whitening agent and the like, header information about the gamut, a print condition name/print condition set name, and the like. The production kit information may hold flag information of whether each paper has been purchased. This is because the embodiment is characterized by using production kit information as a combination of print conditions used for management of making colors uniform, but all paper sheets included in a production kit need not be purchased every time.

Note that the production kit information database is shared between the production kit sales system and the management apparatus 100/control apparatus 110/printer. Various unique IDs held by production kit information are generated by the production kit sales system (not shown) or the management apparatus 100/control apparatus 110/printer. Note that an ID determined by a combination of paper and a use printer, such as a production kit ID or a print gamut ID (not shown) determined by a print gamut is held. As for a production kit, the user can customize a combination of a use printer and paper by the production kit sales system (not shown).

As described above, the management unit 301 of the management apparatus 100 refers to a use printer and paper information linked to production kit information, and automatically reflects them as respective print condition settings held by print condition set setting explained in the fifth embodiment with reference to Fig. 14. Note that print conditions are added for each use printer and each paper included in production kit information. More specifically, in production kit information in Fig. 19C, four kinds of print conditions are set. For print condition 1, "office printer 1" is automatically set in a printer 14212, "thin paper (60 g/m²: glossy paper)" is automatically set in paper 14213, and "A4" is automatically set in an output size 14214. As for print condition 2 to print condition 4, settings are similarly automatically reflected based on the production kit information.

Note that when production kit information includes a target print color profile, setting information is further reflected in the print purpose setting (setting 4520 regarding the print purpose in Fig. 14) of print condition set setting.

As described above, according to this embodiment, a paper set suited to uniform color impressions between production contents is provided as a production kit, and production kit information at the time of purchase is used for print setting. Thus, the user need not register print condition settings for each production content, and can easily perform print condition set setting without an error in consistent set production based on one theme.

### (Seventh Embodiment)

The fifth and sixth embodiments have explained control in which settings regarding color management such as a plurality of print conditions are managed, registered, and shared for each set regardless of the kind or design of a production content, and are used in printing by a printer.

The seventh embodiment will explain control in which print conditions are set for a printer paper feeder using print condition set setting explained above with reference to Fig. 14 in paper setting of a printer main body. Note that the feature of the seventh embodiment is also similar to those of the fifth and sixth embodiments, and does not depend on the kind or design of a production content.

A general application does not support the color management function of a print color. Even when the application supports the color management function, color management of a print color is generally performed on the printer side by default, and depends on the printer. On the printer side, color management is individually optimized in accordance with the printer and paper in a standard use method.

That is, the application wants the printer side to perform color management of a print color. However, it is hard for the printer side to easily perform color setting for making colors uniform without an error regardless of the kinds of printer and paper.

However, in print content production, paper is often changed in accordance with the kind of content. In many cases, the print gamut greatly varies in accordance with paper. Therefore, this embodiment is characterized in that when setting paper in the printer paper feeder, one print condition is selected from a print condition set (list 15310) managed by the printer and used while performing color management of a print color on the printer side, as shown in Figs. 18A and 18B. This can suppress a setting error in printing while making colors uniform between different content. Note that print condition set setting information explained with reference to Fig. 14 may be shared and used between a plurality of printers. By sharing the print condition set setting information between a plurality of printers, setting control for making impressions of color to be printed in the use of different printers and paper sheets uniform becomes possible even if color management of each printer is not executed by an application of design production or the like.

The operation of a color setting management system according to this embodiment will be explained with reference to the flowchart of Fig. 16. Only steps different from those in the above-described embodiments will be explained. In step S1601, if designation of a print condition set setting management button is accepted from the setting menu (not shown) of a printer, a print condition set setting management screen 14000 in Fig. 14 is displayed on a display unit 105 of the printer. Then, the user operates the setting screen 14000 using an operation unit 106 of the printer to perform various operations regarding print condition set setting. Note that registration of the print condition set in step S1601 may be performed not by the printer, but by a management apparatus 100 or a control apparatus 110, as described in the fifth embodiment. Setting information of a print condition set may be shared between the management apparatus 100/control apparatus 110 and the printer. Registration of the print condition set has already been described in the above embodiments, and a detailed description thereof will not be repeated.

In step S1602, if the printer accepts designation of a paper setting button from the setting menu (not shown), it causes the display unit 105 of the printer to display a paper setting screen 18000 in Figs. 18A and 18B. The user operates the screen 18000 using the operation unit 106 to perform various operations regarding paper setting. In response to this, a setting unit 304 of the printer performs settings regarding paper setting managed by a management unit 301 of the printer.

Details of Figs. 18A and 18B will be explained. The paper setting screen 18000 has a paper feeder setting 18100, and a paper kind setting 18200 used in the paper feeder because a paper kind to be used can be set for each paper feeder of the printer. As for the paper kind, the paper setting screen 18000 has a setting 15210 for using a print condition set for the paper kind.

In Fig. 18A, "manual paper feeder" is selected as the paper feeder, a setting for using a print condition set is validated for the paper kind, and thus the paper kind setting 18200 cannot be used and is grayed out.

An area 15300 is a detailed setting area of a print condition displayed when a setting for using a print condition set is valid. The user selects the name of a print condition set to be used from the list 15310 using the operation unit 106. With a radio button 15320, the user selects one print condition from print conditions (for example, 14210 and 14220) included in the selected print condition set. Note that Figs. 18A and 18B exemplifies a paper setting screen in printer A. Since a printer 14212 of print condition 2 is printer B (not supported), print condition 2 cannot be used and is grayed out. Therefore, only print condition 1 of printer A is available with the radio button 15320 in Fig. 18B.

The rest of the area 15300 has been explained in the fifth embodiment, and a detailed description thereof will not be repeated. In step S1603, the user performs design production using the operation unit 106 of the management apparatus 100/control apparatus 110.

In step S1604, the user operates the operation unit 106 to perform setting for printing design data created in step S1603, and issue a print job. More specifically, upon receiving a print setting instruction from the operation unit 106, a UI control unit 303 controls the display unit 105 of the management apparatus 100/control apparatus 110 to display a print setting screen 17000 for a production content exemplified in Fig. 17.

The user operates the print setting screen 17000 using the operation unit 106 to perform various operations regarding print settings and issuance of a print job. Then, a setting unit 304 performs print condition settings for production contents to be printed. An issuing unit 302 issues a print job to the printer in accordance with the print condition settings set by the setting unit 304.

Note that the print setting screen is not limited to the print setting screen 17000. By sharing the print condition set setting information and the paper feed method information between the printer and the management apparatus 100/control apparatus 110, a print setting screen 15000 having the setting 15210 for using a print condition set and the area 15300 may be displayed, similar to the fifth embodiment. Since color management is performed on the printer side, the print setting screen 17000 provides a function display of an excerpt from the print setting screen 15000. Details of the display have been explained in the description of the print setting screen 15000, and a description thereof will not be repeated.

In step S1605, the management unit 301 of the printer receives the print job transmitted from the management apparatus 100/control apparatus 110, and checks the print condition settings included in the received print job. If printing based on the print conditions is possible on the printer side, the printer executes color conversion in step S505, and outputs the resultant data on paper in step S506.

Note that steps S1601 and S1602 are not limited to this order and can be executed anytime before color conversion in step S505 starts. As described above, this embodiment has explained control in which print conditions are set for a paper feeder using a print condition set in paper setting of a printer main body. While performing color management of a print color on the printer side in a conventional manner, it is possible to suppress a setting error by a printing company in printing, and perform color management so as to uniform colors between contents.

The configurations and operation methods of UI screens such as an application screen used in the above embodiments are merely an example, and are not limited to specific configurations and operation methods as long as the configurations and operation methods can achieve similar functions.

Numerical values, processing timings, processing orders, processing entities, a data (information) configuration/obtaining method/transmission destination/transmission source/storage location, and the like used in the above embodiments and modifications are merely an example, and it is not intended to limit them to such an example.

Some or all of the above-described embodiments and modifications may be properly combined and used. Alternatively, some or all of the above-described embodiments and modifications may be selectively used.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit, ASIC) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit, CPU, micro processing unit, MPU) and may include a network of separate computers or separate processors to read out and execute the computer executable instructions. The computer executable instructions may be provided to the computer, for example, from a network or the storage medium. The storage medium may include, for example, one or more of a hard disk, a random-access memory, RAM, a read only memory, ROM, a storage of distributed computing systems, an optical disk (such as a compact disc, CD, digital versatile disc, DVD, or Blu-ray Disc, BD^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An information processing apparatus **characterized by** comprising:
display control means for displaying a setting screen for a plurality of content to be printed; and
setting means for performing a print setting for making color impressions uniform between the plurality of content based on a user instruction via the setting screen.

2. The apparatus according to claim 1, **characterized in that** the display control means displays a print setting of content selected from the plurality of content in accordance with a user operation.

3. The apparatus according to claim 2, **characterized in that** in a case where a setting for making color impressions uniform between contents is designated, the display control means displays a color setting in an inoperable state.

4. The apparatus according to claim 1, **characterized in that** as a setting for making color impressions uniform between the plurality of content, the setting means uses a color setting corresponding to a print purpose selected in accordance with a user operation.

5. The apparatus according to claim 1, **characterized in that** as a setting for making color impressions uniform between the plurality of content, the setting means uses a print condition selected in accordance with a user operation.

6. The apparatus according to claim 1, **characterized in that** in a case where a setting for making color impressions uniform between the plurality of content is designated, the display control means displays a list of candidates of the setting, and
the setting means performs a setting selected from the displayed list of settings in accordance with a user operation.

7. The apparatus according to claim 1, **characterized in that** as for content selected from the plurality of content in accordance with a user operation, the setting means performs a setting for making color impressions uniform between contents.

8. The apparatus according to claim 1, **characterized in that** the setting means selects a first content from the plurality of content in accordance with a user operation, and a color setting of a second content different from the first content out of the plurality of content is set to be identical to a color setting of the first content.

9. The apparatus according to claim 1, **characterized in that** the setting means sets a setting by the setting means not to be changed on a printing side of the content.

10. The apparatus according to claim 1, **characterized in that** the contents include a derivative content generated from an existing content.

11. The apparatus according to claim 1, **characterized in that** the print setting includes a setting of a target color of content in printing.

12. The apparatus according to claim 1, **characterized in that** the print setting includes a setting of a print condition of content.

13. The apparatus according to claim 1, **characterized by** further comprising transmission means for transmitting a print job including the print setting.

14. An information processing method **characterized by** comprising:
displaying a setting screen for a plurality of content to be printed; and
performing a print setting for making color impressions uniform between the plurality of content based on a user instruction via the setting screen.

15. A computer-readable storage medium storing a computer program comprising instructions which, when the program is executed by a computer, cause the computer to carry out the method of claim 14.
